# EUROPEAN PATENT SPECIFICATION

(11) **EP 3 849 696 B1**
(45) Date of publication and mention of the grant of the patent: **24.06.2026**
(21) Application number: 19786685.8
(22) Date of filing: 06.09.2019
(51) Int. Cl.: C08G 63/91, C08G 81/00, C09B 67/46, C09D 7/65, C09D 11/03

(54) **MULTI-AMINE POLYESTER DISPERSANT AND METHOD OF MAKING**
MULTIAMIN-POLYESTER-DISPERGIERMITTEL UND VERFAHREN ZUR HERSTELLUNG
DISPERSANT POLYESTER MULTI-AMINE ET SON PROCÉDÉ DE FABRICATION

(30) Priority: 10.09.2018 US 201862729009 P; 07.02.2019 US 201962802356 P
(43) Date of publication of application: 21.07.2021
(73) Proprietor: Lubrizol Advanced Materials, Inc., Cleveland, OH 44141-3247 (US)
(72) Inventor: COULBECK, Elliot, Blackley M9 8ZS (GB); THETFORD, Dean, Blackley M9 8ZS (GB); GREEN, Sasa, Blackley M9 8ZS (GB)
(74) Representative: Bradley, Josephine Mary
(86) International application number: PCT/US2019/049995
(87) International publication number: WO 2020/055691

(56) References cited:
- WO-A1-01/21298
- WO-A1-94/21368
- WO-A1-98/19784

## Description

### FIELD OF INVENTION

The present invention relates to a dispersant of a multi-amine species (a polyamine such as polyethyleneimine) reacted with two different polyesters and a method of making the dispersant.

### BACKGROUND OF THE INVENTION

Polyamine derived dispersants are generally understood to be effective as pigment dispersants. The composition and molecular weight of the steric stabilization chains of these dispersants are important to effectively disperse solids in continuous media, both polar and non-polar. Many formulations such as inks, paints, millbases and plastics materials require dispersants for uniformly distributing particulate solids in organic media. Dispersants based on polyester polymers are known to provide benefits such as broader solubility in various solvent media and improvements in fluidity and optical properties. It is desirable for pigment dispersions to be compatible with different ink or coating formulations.

It has been found that it is difficult to graft a polyamine with a polyester chain that includes certain monomer units, such as lactides. Polyamine dispersant polymers containing polyester chains linked by a mixture of salt and amide linkages cannot be made using traditional methods for making such polymers because side reactions create undesirable products. The inclusion of these monomer species and a dispersant having a mixture of salt and amide linkages can provide benefits to the performance of the dispersants and therefore, the optical properties of a formulation including these dispersants.

WO 01/21298 A1 describes, according to its abstract, a dispersant which comprises a polyamine (e.g. polyallylamine) or polyimine (e.g. polyethyleneimine) backbone chain containing side chains of two or more different types of polyester chain wherein at least one type of polyester chain is derivable from one or more hydroxy carboxylic acids all of which contain a C₁₋₆-alkylene group or lactone thereof such as ε-caprolactone and/or δ-valerolactone and at least one other type of polyester chain derivable from one or more hydroxy carboxylic acids wherein at least one of the hydroxy carboxylic acids contains a C₈₋₃₀-alkylene chain (e.g. 12-hydroxystearic acid) or a C₈₋₃₀-alkenylene chain (e.g. ricinoleic acid) or lactone thereof.

WO 98/19784 describes, according to its abstract, a dispersant of general Formula (1)

T-(A)ₙ(B)ₚ-Z (1)

wherein T is hydrogen or a polymerisation terminating group; Z is an acidic or basic group or a moiety containing either an acidic or basic group; A and B are each, independently, oxyalkylene carbonyl groups derivable from δ-valerolactone, ε-caprolactone or alkyl substituted ε-caprolactone provided that both are not ε-caprolactone or δ-valerolactone; n and p are integers; and n + p is from 2 to 100; including salts thereof.

WO 94/21368 A1 describes, according to its abstract, a dispersant comprising a polyethyleneimine residue carrying polyester chains derived from a caprolactone and at least one other specified lactone or hydroxycarboxylic acid.

### SUMMARY OFTHE INVENTION

The present invention provides a novel dispersant polymer that contains polyester chains including monomers derived from the polyesterification reaction of lactide, glycolide, lactic acid, or glycolic acid monomers. These dispersant polymers are MA is a multiamine species having a number average molecular weight of 300 to 100,000 g/mol, wherein the number average molecular weight is measured by ebullioscope method analysis. . PE1 is a polyester chain having the formula R₁-(Q)₃-[OR₃-C(=O)]ₙ-(X)_{z}, wherein R₁ is H, R₂C(=O)-, or R₂-O(C=O)-R₅-(C=O)-. R₂ is a branched or linear, saturated or unsaturated hydrocarbon chain containing 1 to 25 carbon atoms. R₅ is a branched or linear, saturated or unsaturated hydrocarbon chain containing 1 to 20 carbon atoms, where Q is derived from a dihydroxyl mono-carboxylic acid having 4 to 7 carbon atoms, and forms a branch point in the polyester chain and b is 0, 1, or 2. R₃ is a branched or linear, saturated or unsaturated hydrocarbon chain containing 3 to 25 carbon atoms or -R₄-OC(=O)R₅-, wherein R₄ is a branched or linear, saturated or unsaturated hydrocarbon chain containing 2 to 30 carbon atoms and R₅ is as defined above. The variable n is 3 to 43. The variable z is 0 or 1, wherein when z is 1, X is O⁻ and PE1 is attached to MA by a salt linkage and when z is 0, PE1 is attached to MA by an amide bond. PE1 is attached to MA by at least 10 mol% amide bonds, for example, at least 50 mol% amide bonds, or further for example, 90 mol% amide bonds. In Formula I, PE2 is a polyester chain having the formula R₆-(T)ₘ-(Q)_{b}-(V)ᵣ-(Z)_{y}-O⁻. In PE2, y is 0 or 1. When y is 0, R₆ is H- or R₂C(=O)-. When y is 1, R₆ is R₂O- or R₂O-(CH₂CHR₇O)ₛ-, s is 1 to 45, and R₇ is H or CH₃ or CH₂CH₃. Q is derived from a dihydroxyl mono-carboxylic acid having 4 to 7 carbon atoms, and forms a branch point in the polyester chain and b is 0, 1, or 2. Z is derived from a polyphosphoric acid, phosphorous pentoxide, or a 5 or 6 membered cyclic anhydride and may be, for example 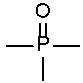 where Z connects two R₆-(T)ₘ-(Q)_{b}-(V)ᵣ chains and the third bond is attached to O⁻, 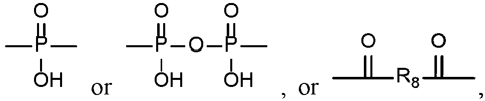 where R₈ is either a C2 or C3 alkyl carbon chain with optional C1-20 chain substituent, or a C6 or C10 aromatic structure with optional substituents from carboxylic acids, halides, C1-4 carbon chains or nitro groups. T is a monomeric repeat unit derived from the polyesterification reaction of lactide, glycolide, lactic acid, or glycolic acid monomers and m is 1 to 50, for example 2 to 14. V is a repeat unit derived from the polyesterification of a lactone monomer having 4 to 12 carbon atoms or a hydroxyl carboxylic acid monomer having 4 to 20 carbon atoms. The variable r is 0 to 30, for example 1 to 30, or even further for example, 4 to 15. PE2 is attached to a MA by a salt linkage.

In Formula I, p and q are both at least 1, p+q is 2 to 800 and the relative ratio of p to q is 90:10 to 10:90; wherein PE1 does not contain a monomer derived from lactide, glycolide, lactic acid, or glycolic acid.

Both PE1 and PE2 have a number average molecular weight (Mn) between 500 and 4,000 g/mole measured via titration against tetraethylammonium hydroxide, and may have block or random architecture, provided that PE1 is attached to MA by the requisite amount of amide linkages and PE2 is attached to MA by salt linkages.

The method of making the dispersant of the present invention is according to claim 4 and includes reacting two different polyesters with a multiamine species. The method includes the steps of providing the multiamine species (MA), providing a first polyester (PE1 as described above), wherein the first polyester does not contain a monomer derived from lactide, glycolide, lactic acid, or glycolic acid then reacting the PE1 with MA at a temperature above 100°C, wherein the first polyester is attached to the multi-amine species by at least 10 mol% amide bonds to form (PE1)ₚ-MA. The (PE1)ₚ-MA is cooled to a temperature below 100°. Then a second polyester (PE2 as described above) containing a monomeric repeat unit derived from the polyesterification of lactide, glycolide, lactic acid, or glycolic acid monomers is provided and reacted with (PE1)ₚ-MA at a temperature below 100°C to form salt linkages between PE2 and (PE1)ₚ-MA to form (PE1)ₚ-MA-(PE2)_{q}.

Disclosed herein is that the dispersant polymer can be mixed with particulate solid materials in continuous media in order to form dispersions which can then be used in materials such as coatings, inks, paints, compounded rubber or plastics. In another aspect, the present invention discloses the use of the reaction product of the method according to the invention as a dispersant. In a further aspect, the present invention discloses a coating, paint, ink, or compounded rubber or plastic comprising a dispersed particulate solid, a continuous medium, and the dispersant according to the present invention.

### DETAILED DESCRIPTION OF THE INVENTION

In the following detailed description of the invention, the term hydrocarbyl will refer to monovalent hydrocarbon groups that may optionally include other heteroatoms (such as O and N) in conventional or specified amounts such as one oxygen and or nitrogen for every two or every ten carbon atoms in the group, but preferably just carbon and hydrogen. The term hydrocarbylene will refer to divalent hydrocarbon groups that may optionally include other heteroatoms such as O and N as defined for hydrocarbyl.

MA represents a multi-amine species. The multi-amine species used in the present invention has a number average molecular weight (Mn) measured by ebullioscopic method analysis of between 300 and 100,000 g/mole, for example, 500 to 100,000 g/mol, further for example, 1000 to 50,000 g/mol. In one embodiment, the multiamine has 3 or more nitrogen atoms, for example 5 or more nitrogen atoms. In one embodiment, MA is a polyamine having a number average molecular weight between 300 and 100,000g/mole and is selected from polyethyleneimine, modified polyethyleneimine, polyallylamine, modified polyallylamine, polyvinylamine, modified polyvinylamine or mixtures thereof. In one embodiment, at least 70, 80, 90 or 95 weight percent of the multi-amine species is polyethyleneimine.

The MA may be linear or branched. Linear polyethyleneimines may be prepared by hydrolysis of poly (N-acyl) alkyleneimines as described, for example, by Takeo Saegusa et al in Macromolecules, 1972, Vol. 5, page 4470. The branched polyethyleneimines of differing molecular weights are commercially available from BASF and Nihon Shokubai. Polyallylamine and poly-(N-alkyl) allylamines of differing molecular weights are commercially available from Nitto Boseki. Polyvinylamine of differing molecular weights are available from Mitsubishi Kasai. Poly(propyleneimine) dendrimers are commercially available from DSM Fine Chemicals and poly(amidoamine) dendrimers are available as "Starburst" dendrimers from Aldrich Chemical Co. In one embodiment, MA is poly(C2-6-alkyleneimine) and/or polyethylene imine.

In another embodiment, MA may be modified by reacting a portion of its primary and/or secondary amino groups with esters such as ethyl or butyl acetate, isocyanates such as phenyl isocyanate, lactones such as caprolactone and valerolactone, anhydrides such as succinic or maleic or phthalic anhydride, cyclic carbonates such as ethylene carbonate, (meth)acrylates such as ethyl acrylate or 2-hydroxyethyl acrylate, or epoxides, such as phenyl glycidal ether, while ensuring there are still primary and/or secondary amino groups of the modified polyamine that are unmodified and hence still in the amine form.

In another embodiment, MA may be polyethylene imine. The polyethylene iminie may be modified by substituting one or more protons of the NH units by a C2-4 alkyleneoxy unit. Polyethyleneimine can be modified by alkoxylation using a C2-4 alkylene oxide such as ethylene oxide, propylene oxide, butylene oxide or mixtures thereof. Examples of alkoxylated polyethyleneimines are commercially available from BASF and Nihon Shokubai. In this embodiment, the so-modified MA will still contain primary and/or secondary amino groups that are unmodified and still in amine form in order to form the dispersant polymers described herein.

PE1 is a polyester chain of number average molecular weight (Mn) between 500 and 4,000 g/mole measured via titration against tetraethylammonium hydroxide, which is attached to the multi amine species (MA) via at least 10 mol% amide bonds, for example, at least 50 mol% amide bonds, or even at least 90 mol% amide bonds.

In the present invention, PE1 has the formula R₁-(Q)₃-[OR₃-C(=O)]ₙ-(X)_{z}. R₁ is H, R₂C(=O)-, or R₂-O(C=O)-R₅-(C=O)-. R₂ is a branched or linear, saturated or unsaturated hydrocarbon chain containing 1 to 25 carbon atoms. R₅ is a branched or linear, saturated or unsaturated hydrocarbon chain containing 1 to 20 carbon atoms. R₃ is a branched or linear, saturated or unsaturated hydrocarbon chain containing 3 to 25 carbon atoms or -R₄-OC(=O)R₅-, wherein R₄ is a branched or linear, saturated or unsaturated hydrocarbon chain containing 2 to 30 carbon atoms and R₅ is as defined above. The variable n is 3 to 43. Q is derived from a dihydroxyl mono-carboxylic acid having 4 to 7 carbon atoms, and forms a branch point in the polyester chain and b is 0, 1, or 2. The variable z is 0 or 1, wherein when z is 1, X is O⁻ and PE1 is attached to MA by a salt linkage and when z is 0, PE1 is attached to MA by an amide bond. In order to provide the desired amount of amide bonds, in at least 10 mol%, or at least 50 mol%, or even at least 90 mol% of PE1, z is 0.

PE1 is totally free of units derived from lactide, glycolide, lactic acid, or glycolic acid monomers. PE1 may have a block or random architecture provided that PE1 is attached to MA by at least 10 mol% amide linkages.

PE2 is a polyester chain having a number average molecular weight (Mn) between 500 and 4,000 g/mole measured via titration against tetraethylammonium hydroxide, which is attached to the multi amine species (MA) via a salt linkage.

In the present invention, PE2 is a polyester chain having the formula R₆-(T)ₘ-(Q)_{b}-(V)ᵣ-(Z)_{y}-O⁻. In PE2, y is 0 or 1. When y is 0, R₆ is H- or R₂C(=O)-. When y is 1, R₆ is R₂O- or R₂O-(CH₂CHR₇O)ₛ-, s is 1 to 45, and R₇ is H or CH₃ or CH₂CH₃. When the variable y is 1, Z is derived from a polyphosphoric acid, phosphorous pentoxide, or a 5 or 6 membered cyclic anhydride. In one embodiment, Z may derived from polyphosphoric acid or phosphorous pentoxide, and is 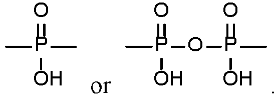 In another embodiment, Z is: 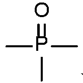 where two R₆-(T)ₘ-(Q)_{b}-(V)ᵣ chains are joined by Z and the third bond is attached to the O^{-.} In another embodiment, Z is derived from a 5 or 6 membered cyclic anhydride. In this embodiment, Z has the structure: 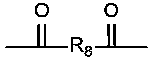 where R₈ is either a C2 or C3 alkyl carbon chain with an optional C1-20 chain substituent, or a C6 or C10 aromatic structure with optional substituents such as carboxylic acids, halides, C1-4 carbon chains or nitro groups. T is a monomeric repeat unit derived from the polyesterification reaction of lactide, glycolide, lactic acid, or glycolic acid monomers and m is 1 to 50, for example, in one embodiment, m is 2 to 14. Q is derived from a dihydroxyl mono-carboxylic acid having 4 to 7 carbon atoms, and forms a branch point in the polyester chain and b is 0, 1, or 2. V is a repeat unit derived from the polyesterification of a lactone monomer having 4 to 12 carbon atoms or a hydroxyl carboxylic acid monomer having 4 to 20 carbon atoms and r is 0 to 30, for example, in one embodiment, m is 4 to 15. PE2 may have a block or random architecture provided that PE2 is attached to a MA by a salt linkage.

PE1 can be synthesized by any method known to those skilled in the art, including but not limited to a) polymerization of lactones and/or hydroxycarboxylic acids optionally in the presence of monocarboxylic acids to initiate the polyester chain extension or b) polymerization reaction of a diol with a dibasic acid or derivatives thereof such as acid chlorides, anhydride or dialkylesters in the presence of a stoichiometric amount of monocarboxylic acid to control molecular weight and suppress formation of dihydroxy polyesters.

PE2 can be synthesized by any method known to those skilled in the art, including but not limited to a) polymerization of lactide and/or glycolide and/or lactic acid and/or glycolc acid monomers lactides optionally with hydroxycarboxylic acids and/or lactones optionally in the presence of monocarboxylic acids to initiate the polyester chain extension which leads to PE2 where y is 0 or b) polymerization of lactide and/or glycolide and/or lactic acid and/or glycolic acid monomers optionally with lactones in the presence of mono-alcohols or polyethers with a single alcohol group, to initiate the polyester chain extension, to generate an alcohol ended polyester which is converted to a acid ended polymer via reaction of the terminal hydroxy group with either polyphosphoric acid, phosphorus pentoxide or a 5 or 6 membered cyclic anhydride.

The synthesis of PE1 and PE2 may also be accomplished by any methods now known or hereafter developed without departing from the scope of the invention.

Specific examples of suitable hydroxy carboxylic acids are ricinoleic acid, 12-hydroxystearic acid, 6-hydroxy caproic acid, 5-hydroxy valeric acid, 12-hydroxy dodecanoic acid, 5-hydroxy dodecanoic acid, 5-hydroxy decanoic acid, 4-hydroxy decanoic acid, 10-hydroxy undecanoic acid.

Specific examples of dihydroxyl mono-carboxylic acids useful in the present invention include 2,2-Bis(hydroxymethyl)butyric acid and 2,2-Bis(hydroxymethyl)propionic acid.

Examples of the lactones is preferably optionally C1-4 alkyl substituted ε-caprolactone, optionally substituted C1-4 alkyl δ-valerolactone and β-propiolactone.

Specific examples of suitable diols include alkylene glycols such as ethylene glycol, propylene glycol, neopentyl glycol, 1,4-butanediol, 1,6-hexanediol, cis and trans 1,2- and 1,4-cyclohexanedimethanol, diols with ether linkages such as diethylene glycol, dipropylene glycol, tripropylene glycol and triethylene glycol, polyalkylene glycols such as polyethylene glycols, polypropylene glycols, polybutylene glycols, mixed block and random copolymers of polyethylene glycol and polypropylene glycol (Pluronic^{™} and reverse Pluronic^{™} ex BASF) with MW less than 1000.

Specific examples of suitable dibasic acids, diesters and anhydrides include maleic anhydride, succinic anhydride, glutaric acid, fumaric acid, malonic acid, adipic acid, sebacic acid, phthalic anhydride, pimelic acid, dimer fatty acids and their hydrogenated versions, and cyclohexane dicarboxylic anhydride.

Examples of monocarboxylic acids used to synthesize PE1 or PE2 include C1-25 carboxylic acids which may be saturated, unsaturated, branched, alkyl or aryl and may be substituted with C1-4 alkoxy or halogen. Specific examples include propionic acid, oleic, palmitic, stearic, erucic, lauric, 2-ethylhexanoic, 9,11- and 9,12-linoleic, 9,12,15-linolenic acids, abietic acid, methoxyacetic, 2,2-dimethyl butanoic acid and caproic acid.

Examples of monoalcohols used to synthesize PE1 or PE2 include C1-25 alcohols which may be saturated, unsaturated, branched, alkyl or aryl and may be substituted with C1-4 alkoxy or halogen. Specific examples include butanol, hexanol, and alcohols commercially available from Sasol under the trademark ISOFOL^{™}.

Specific examples of suitable polyethers include Poly(ethylene glycol) methyl ether, Poly(propylene glycol) butyl ether.

In Formula 1, p and q are both at least 1 and p+q is between 2 and 800, for example 4 to 200. The relative ratio of p to q is 90:10 to 10:90, for example, between 50:50 and 20:80.

The dispersant of the present invention is made using a novel process comprising the following steps:
(1) providing a multi-amine species (MA) as described herein, having a number average molecular weight of 300 to 100,000 g/mol, wherein the number average molecular weight is measured by ebullioscope method analysis;
(2) providing a first polyester (PE1) having a number average molecular weight (Mn) between 500 and 4,000 g/mole measured via titration against tetraethylammonium hydroxide, wherein the first polyester does not contain a monomer derived from lactide, glycolide, lactic acid, or glycolic acid;
(3) reacting PE1 with MA at a temperature above 100°C wherein the PE1 is attached to MA by at least 10 mol% amide bonds to form PE1-MA, for example, at least 50 mol%, further for example at least 90 mol% amide bonds to form PE1-MA;
(4) providing a second polyester (PE2) having a number average molecular weight (Mn) between 500 and 4,000 g/mole measured via titration against tetraethylammonium hydroxide, which contains a monomeric repeat unit derived from the polyesterification of lactide, glycolide, lactic acid, or glycolic acid monomers;
(5) reacting PE2 with PE1-MA at a temperature below 100°C to form salt linkages between PE2 and PE1-MA to form PE1-MA-PE2;
   wherein step (3) comprises reacting PE1 with MA for 2 to 72 hours, and/or wherein step (5) comprises reacting PE2 with (PE1)ₚ-MA for 1 to 24 hours;
   wherein the method further comprises cooling the reaction product of step (3) [(PE1)ₚ-MA] to below 100°C before performing step (4);
   wherein PE1 is a polyester chain having the formula R₁-(Q)_{b}-[OR₃-C(=O)]ₙ-(X)_{z}, wherein R₁ is H, R₂C(=O)-, or R₂-O(C=O)-R₅-(C=O)-, wherein R₂ is a branched or linear, saturated or unsaturated hydrocarbon chain containing 1 to 25 carbon atoms and R₅ is a branched or linear, saturated or unsaturated hydrocarbon chain containing 1 to 20 carbon atoms; Q is derived from a dihydroxyl mono-carboxylic acid having 4 to 15 carbon atoms, for example 4 to 7 carbon atoms, and forms a branch point in the polyester chain and b is 0, 1, or 2; R₃ is a branched or linear, saturated or unsaturated hydrocarbon chain containing 3 to 25 carbon atoms or -R₄-OC(=O)R₅-, wherein R₄ is a branched or linear, saturated or unsaturated hydrocarbon chain containing 2 to 30 carbon atoms and R₅ is as defined above; variable n is 3 to 43; variable z is 0 or 1, wherein when z is 1, X is O⁻ and PE1 is attached to MA by a salt linkage and when z is 0, PE1 is attached to MA by an amide bond; and
   wherein PE2 has the formula R₆-(T)ₘ-(Q)_{b}-(V)ᵣ-(Z)_{y}-O⁻ where y is 0 or 1, wherein when y is 0, R₆ is H- or R₂C(=O)- or wherein when y is 1, R₆ is R₂O- or R₂O-(CH₂CHR₇O)ₛ-, s is 1 to 45, and R₇ is H or CH₃ or CH₂CH₃; when the variable y is 1, Z is derived from a polyphosphoric acid, phosphorous pentoxide, or a 5 or 6 membered cyclic anhydride, and can be selected from 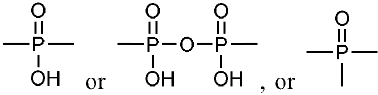 where two R₆-(T)ₘ-(Q)_{b}-(V)ᵣ are joined by Z and the third bond is attached to the O⁻, or 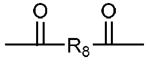 where R₈ is either a C2 or C3 alkyl carbon chain with an optional C1-20 chain substituent, or a C6 or C10 aromatic structure with optional substituents such as carboxylic acids, halides, C1-4 carbon chains or nitro groups; T is a monomeric repeat unit derived from the polyesterification reaction of lactide, glycolide, lactic acid, or glycolic acid monomers and m is 1 to 50, for example, 2 to 14; Q is derived from a dihydroxyl mono-carboxylic acid having 4 to 15 carbon atoms, for example 4 to 7 carbon atoms, and forms a branch point in the polyester chain and b is 0, 1, or 2; V is a repeat unit derived from the polyesterification of a lactone monomer having 4 to 12 carbon atoms or a hydroxyl carboxylic acid monomer having 4 to 20 carbon atoms and r is 0 to 30, for example, 4 to 15.

In one embodiment, the dispersant of Formula I can be further functionalized to adapt its properties and application performance to specific requirements. These modification reactions described below may be between the various reagents listed below and the amines of the polyamine species that have not already been reacted with the polyester groups (PE1 and PE2) detailed above. The modification of any remaining amino groups may take place in any way which is known to a person skilled in the art. Such modifications are desirable when, for example, amino groups will react with a binder system into which a pigment dispersion or paste is incorporated and cause flocculation.

The above stated modifications are advantageous embodiments of the present invention and can be realized by:
a) reaction of one or more of the remaining free primary and secondary amino groups of the polyamine species with isocyanates, lactones, anhydrides, epoxides, cyclic carbonates, or (meth)acrylates. Specific examples of suitable isocyanates include phenyl isocyanate. Specific examples of suitable lactones include caprolactone and valerolactone. Reaction of one or more of the remaining free primary and secondary amino groups of the polyamine species with anhydrides are disclosed in US 6,878,799 and 7,767,750. Specific examples of suitable anhydrides include maleic anhydride, succinic anhydride, phthalic anhdride, tetrahydrophthalic anhydride, methyltetrahydrophthalic anhydride, hexahydrophthalic anhydride, methylhexahydrophthalic anhydride, 1,8-naphthalic anhydride, optionally substituted with nitro or halogen substituents such as Cl and Br, isatoic anhydride, trimellitic anhydride, C_{1 -20} alkenyl and alkyl succinic anhydrides. Reaction of one or more of the remaining free primary and secondary amino groups of the polyamine species with epoxides is disclosed in JP4031471. Specific examples of suitable epoxides include styrene oxide, propylene oxide and ethylene oxide. Specific examples of suitable cyclic carbonates include ethylene carbonate and 2,2-dimethyltrimethylene carbonate. Specific examples of suitable (meth)acrylates includes ethyl acrylate and 2-hydroxyethyl acrylate;
b) salification and/or reaction of one or more of the remaining free primary, secondary or tertiary amino groups of the polyamine species with mono or polycarboxylic acids, mineral acids, phosphorus and polyoxometallate containing acids or strong acids. Suitable reagents for this purpose include hydrochloric acid, acetic acid, sulphuric acid, alkyl sulphonic acids, alkyl hydrogen sulphates or aryl sulphonic acids. Salification and/or reaction of one or more of the remaining free amino groups of the aminic polyamine species with mono or polycarboxylic acids or phosphorus containing acids are disclosed in JP9157374, US 2010/0017973 and US 2013/0126804. Specific examples of suitable mono carboxylic acids include optionally substituted C1-50 aliphatic monocarboxylic acids such as acetic acid, propionic acid, caproic acid, caprylic acid, 2-ethylhexanoic acid, nonanoic acid, decanoic acid, lauric acid, myristic acid, palmitic acid, oleic acid, linoleic acid, stearic acid, arachidic acid, erucic acid, behenic acid, methoxyacetic acid, mixtures of fatty acids derived from oils from naturally occurring sources such as sunflower oil, rape seed oil, castor oil and olive oil, branched alkyl carboxylic acids available under the trademark Isocarb^{™} (ex Sasol), Unicid^{™} acids which are linear C25-50 synthetic primary acids commercially available from Baker Hughes and aromatic carboxylic acids such as benzoic acid, salicylic acid and naphthoic acid. Specific examples of suitable polycarboxylic acids include succinic acid, malonic acid, adipic acid, sebacic acid, malic acid, fumaric acid, citric acid and tartaric acid. Specific examples of suitable phosphorus containing acids include phosphoric acid and phosphorous acid. Specific examples of suitable polyoxometallate containing acids include phosphomolybdic acid, phosphotungstic acid and silicomolybdic acid;
c) oxidation of one or more of the remaining free primary, secondary or tertiary amino groups of the polyamine species to nitrogen oxides;
d) quaternization of one or more of the remaining free tertiary amino groups of the polyamine species. This can be achieved using, alkyl sulfates, alkyl or aralkyl halides, halocarboxylic esters, alkyl oxalates or epoxides. Suitable reagents for this purpose include, dimethyl sulphate, benzyl chloride, methyl halides such as chlorine, bromine and iodine, dimethyl oxalate, ethylene oxide, propylene oxide and styrene oxide in the presence of acids, and propane (or butane) sultone; and
e) reaction of one or more of the remaining free primary, secondary or tertiary amino groups of the polyamine species with one or more mono amino-reactive group terminated polymer(s) of MW 150 - 3000. Suitable examples of carboxylic acid terminated polyester, polyesteramide and polyamide polymers are disclosed in US 4,224,212, 4,861,380, 5,700,395, 5,760,257, 6,197,877, 8,202,935, JP4866255, JP8010601, JP9157361, WO 2006/113258 and WO 2007/039605. Suitable examples of carboxylic acid terminated polyether polymers are disclosed in JP4248207, US 7,767,750, 7,671,119, 7,872,070, 8,076,409 and 8,168,713. Suitable examples of phosphate, sulphate and sulphonate terminated polyester polymers are disclosed in US 4,861,380 and 6,197,877. Suitable examples of (meth)acrylate terminated polyester, polyesteramide and polyamide polymers are disclosed in EP713894, JP3488001, JP2010-222522 and US 8,202,935. Suitable examples of (meth)acrylate terminated polyether polymers are disclosed in US 7,923,474 and JP2010-222522. Suitable examples of phosphate, sulphate and sulphonate terminated polyether, polyether/polyester, polyether/polyurethane and polyether/polyester/polyurethane polymers are disclosed in US 5,130,463, 5,151,218, 6,111,054, 6,310,123, 7,595,416 and 8,202,935. Suitable examples of isocyanate terminated polyester and polyether polymers are disclosed in JP4031471, JP7149855 and WO 2007/039605. Suitable examples of epoxide or acetoacetoxy or cyclocarbonate terminated polyacrylate polymers are disclosed in US 5,100,969.

Herein, it is also disclosed a polyester chain like the PE2 intermediate described herein may be used independently as a dispersant. Such a dispersant will have the formula R6-(T)m-(Q)b-(V)r-(Z)y-OH, wherein y is 1. When y is 1, R6 is R2O- or R2O-(CH2CHR7O)s-, s is 1 to 45, and R7 is H or CH3 or CH2CH3. Z is derived from a polyphosphoric acid or phosphorous pentoxide. For example, Z may be derived from polyphosphoric acid or phosphorous pentoxide, and may be, for example 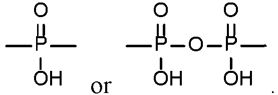 Z may be: 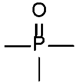 where two R₆-(T)ₘ-(Q)_{b}-(V)ᵣ chains are joined by Z and the third bond is attached to the O. T may be a monomeric repeat unit derived from the polyesterification reaction of lactide, glycolide, lactic acid, or glycolic acid monomers and m may be 1 to 50, for example, in one embodiment, m is 2 to 14. Q is derived from a dihydroxyl mono-carboxylic acid having 4 to 7 carbon atoms, and forms a branch point in the polyester chain and b is 0, 1, or 2. V may be a repeat unit derived from the polyesterification of a lactone monomer having 4 to 12 carbon atoms or a hydroxyl carboxylic acid monomer having 4 to 20 carbon atoms and r is 0 to 30, for example, m is 4 to 15. This dispersant may have a block or random architecture. The dispersant based on the PE2 chain can be synthesized by any method known to those skilled in the art, including but not limited to a) polymerization of lactide and/or glycolide and/or lactic acid and/or glycolic acid monomers lactides optionally with hydroxycarboxylic acids and/or lactones optionally in the presence of monocarboxylic acids to initiate the polyester chain extension which leads to a polyester chain where y is 0 or b) polymerization of lactide and/or glycolide and/or lactic acid and/or glycolc acid monomers optionally with lactones in the presence of mono-alcohols or polyethers with a single alcohol group, to initiate the polyester chain extension, to generate an alcohol ended polyester which is converted to a acid ended polymer via reaction of the terminal hydroxy group with either polyphosphoric acid or phosphorus pentoxide. Polyester dispersants such as described in this paragraph are best used for inorganic pigments, inorganic fillers, as well as flame retardants. The inorganic pigments, inorganic fillers, and flame retardants are described herein below.

One objective of the present invention is to provide compounds that are capable of improving the colour strength or other tinctorial properties, increasing a particulate solid load, and/or forming improved dispersions, having improved brightness of the final composition. This is achieved while also producing a composition with reduced viscosity, good dispersion stability, reduced particle size and reduced particle size distribution, reduced haze, improved gloss, and increased jetness (especially when the composition is black). The composition(s) of the present invention may also be stable under ambient storage, and high temperature storage conditions providing reduced discoloration/yellowing of final coatings.

The polymer of the invention herein is useful as a dispersant for various small particle dispersions such as suspendable pigments and particulates in various polar and non-polar media. The compositions of various particulates, the dispersant, and a continuous phase are useful as inks, coatings, paints, and millbases for coloring inks, coatings, and paints. Therefore, the present invention also includes a pigment dispersion or a coating, paint, ink, compounded rubber, or compounded plastic including the dispersant polymer of the present invention as described herein.

Thus, when the dispersant is to be used to disperse a particulate solid in a non-polar medium, preferably one or more of the hydroxy carboxylic acids containing a C₇₋₁₇-alk(en)ylene group are used. When a dispersant is desired to be used to disperse a particulate solid in a polar medium, it is preferred that one or more and especially all of the hydroxy carboxylic acids or lactones thereof contains a C₁₋₆-alkylene group.

### Industrial Application

The particulate solid present in the composition may be any inorganic or organic solid material which is substantially insoluble in the organic medium at the temperature concerned and which it is desired to stabilize in a finely divided form therein. The particulate solids may be in the form of a granular material, a fibre, a platelet or in the form of a powder, often a blown powder. In one embodiment, the particulate solid is a pigment.

The particulate solid (typically a pigment or filler) may have an average particle size measured by light scattering measurements of from 10 nanometers to 10 microns, or 10 nanometers to 1, 2, 3 or 5 microns, or 20 nanometers to 1, 2, 3 or 5 microns in diameter.

Examples of suitable solids are pigments for solvent inks; pigments, extenders, fillers, blowing agents and flame retardants for paints and plastic materials; dyes, especially disperse dyes; optical brightening agents and textile auxiliaries for solvent dyebaths; pigments for inks, toners and other solvent application systems; solids for oilbased and inverse-emulsion drilling muds; dirt and solid particles in dry cleaning fluids; metals; particulate ceramic materials and magnetic materials for ceramics, piezo ceramic printing, refractories, abrasives, foundry, capacitors, fuel cells, Ferro fluids, conductive inks, magnetic recording media, water treatment and hydrocarbon soil remediation; organic and inorganic monodisperse solids; metal, metal oxides and carbon for electrodes in batteries, fibers such as wood, paper, glass, steel, carbon and boron for composite materials; and biocides, agrochemicals and pharmaceuticals which are applied as dispersions in organic media.

In one embodiment, the solid is an organic pigment from any of the recognised classes of pigments described, for example, in the Third Edition of the Colour Index (1971) and subsequent revisions of, and supplements thereto, under the chapter headed "Pigments." Examples of organic pigments are those from the azo, disazo, trisazo, condensed azo, azo lakes, naphthol pigments, anthanthrone, anthrapyrimidine, anthraquinone, benzimidazolone, carbazole, diketopyrrolopyrrole, flavanthrone, indigoid pigments, indanthrone, isodibenzanthrone, isoindanthrone, isoindolinone, isoindoline, isoviolanthrone, metal complex pigments, oxazine, perylene, perinone, pyranthrone, pyrazoloquinazolone, quinacridone, quinophthalone, thioindigo, triarylcarbonium pigments, triphendioxazine, xanthene and phthalocyanine series, especially copper phthalocyanine and its nuclear halogenated derivatives, and also lakes of acid, basic and mordant dyes. Carbon black, although strictly inorganic, behaves more like an organic pigment in its dispersing properties. In one embodiment, the organic pigments are phthalocyanines, especially copper phthalocyanines, monoazos, disazos, indanthrones, anthranthrones, quinacridones, diketopyrrolopyrroles, perylenes and carbon blacks.

Examples of inorganic pigments include metallic oxides such as titanium dioxide, rutile titanium dioxide and surface coated titanium dioxide, titanium oxides of different colors such as yellow and black, iron oxides of different colors such as yellow, red, brown and black, zinc oxide, zirconium oxides, aluminium oxide, oxymetallic compounds such as bismuth vanadate, cobalt aluminate, cobalt stannate, cobalt zincate, zinc chromate and mixed metal oxides of two or more of manganese, nickel, titanium, chromium, antimony, magnesium, praseodymium, cobalt, iron or aluminium, Prussian blue, vermillion, ultramarine, zinc phosphate, zinc sulphide, molybdates and chromates of calcium and zinc, metal effect pigments such as aluminium flake, copper, and copper/zinc alloy, pearlescent flake such as lead carbonate and bismuth oxychloride.

Inorganic solids include extenders and fillers such as ground and precipitated calcium carbonate, calcium sulphate, calcium oxide, calcium oxalate, calcium phosphate, calcium phosphonate, barium sulphate, barium carbonate, magnesium oxide, magnesium hydroxide, natural magnesium hydroxide or brucite, precipitated magnesium hydroxide, magnesium carbonate, dolomite, aluminium trihydroxide, aluminium hydroperoxide or boehmite, calcium and magnesium silicates, aluminosilicates including nanoclays, kaolin, montmorillonites including bentonites, hectorites and saponites, ball clays including natural, synthetic and expandable, mica, talc including muscovites, phlogopites, lepidolites and chlorites, chalk, synthetic and precipitated silica, fumed silica, metal fibres and powders, zinc, aluminium, glass fibres, refractory fibres, carbon black including single- and multi-walled carbon nanotubes, reinforcing and non-reinforcing carbon black, graphite, Buckminsterfullerene, asphaltene, graphene, diamond, alumina, quartz, perlite, pegmatite, silica gel, wood flour, wood flake including soft and hard woods, saw dust, powdered paper/fibre, cellulosic fibres such as kenaf, hemp, sisal, flax, cotton, cotton linters, jute, ramie, rice husk or hulls, raffia, typha reed, coconut fibre, coir, oil palm fibre, kapok, banana leaf, caro, curaua, henequen leaf, harakeke leaf, abaca, sugar cane bagasse, straw, bamboo strips, wheat flour, MDF and the like, vermiculite, zeolites, hydrotalcites, fly ash from power plants, incinerated sewage sludge ash, pozzolanes, blast furnace slag, asbestos, chrysotile, anthophylite, crocidolite, wollastonite, attapulgite and the like, particulate ceramic materials such as alumina, zirconia, titania, ceria, silicon nitride, aluminium nitride, boron nitride, silicon carbide, boron carbide, mixed silicon-aluminium nitrides and metal titanates; particulate magnetic materials such as the magnetic oxides of transition metals, often iron and chromium, e.g., gamma-Fe₂O₃, Fe₃O₄, and cobalt-doped iron oxides, ferrites, e.g. barium ferrites; and metal particles, for instance metallic aluminium, iron, nickel, cobalt, copper, silver, gold, palladium, and platinum and alloys thereof.

Other useful solid materials include flame retardants such as pentabromodiphenyl ether, octabromodiphenyl ether, decabromodiphenyl ether, hexabromocyclododecane, ammonium polyphosphate, melamine, melamine cyanurate, antimony oxide and borates; biocides or industrial microbial agents such as those mentioned in tables 2, 3, 4, 5, 6, 7, 8 and 9 of the chapter entitled "Industrial Microbial Agents" in Kirk-Othmer's Encyclopedia of Chemical Technology, Vol. 13, 1981, 3rd Edition, and agrochemicals such as the fungicides flutriafen, carbendazim, chlorothalonil and mancozeb.

The organic medium present in dispersions of the invention is, in one embodiment, is a plastics material and in another embodiment an organic liquid. The organic liquid may be a non-polar or a polar organic liquid. By the term "polar," in relation to the organic liquid, it is meant that an organic liquid is capable of forming moderate to strong bonds as described in the article entitled "A Three Dimensional Approach to Solubility" by Crowley et al in Journal of Paint Technology, Vol. 38, 1966, page 269. Such organic liquids generally have a hydrogen bonding number of 5 or more as defined in the abovementioned article.

Examples of suitable polar organic liquids are amines, ethers, especially lower alkyl ethers, organic acids, esters, ketones, glycols, glycol ethers, glycol esters, alcohols and amides. Numerous specific examples of such moderately strongly hydrogen bonding liquids are given in the book entitled "Compatibility and Solubility" by Ibert Mellan (published in 1968 by Noyes Development Corporation) in Table 2.14 on pages 39-40 and these liquids all fall within the scope of the term polar organic liquid as used herein.

In one embodiment, polar organic liquids are dialkyl ketones, alkyl esters of alkane carboxylic acids and alkanols, especially such liquids containing up to, and including, a total of 6 carbon atoms. As examples of the polar organic liquids include dialkyl and cycloalkyl ketones, such as acetone, methyl ethyl ketone, diethyl ketone, diisopropyl ketone, methyl isobutyl ketone, di-isobutyl ketone, methyl isoamyl ketone, methyl n-amyl ketone and cyclohexanone; alkyl esters such as methyl acetate, ethyl acetate, isopropyl acetate, butyl acetate, ethyl formate, methyl propionate, methoxypropyl acetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alkanols such as methanol, ethanol, n-propanol, isopropanol, n-butanol and isobutanol (also known as 2-methylpropanol), terpineol and dialkyl and cyclic ethers such as diethyl ether and tetrahydrofuran. In one embodiment, solvents are alkanols, alkane carboxylic acids and esters of alkane carboxylic acids. In one embodiment, the present invention is suitable for organic liquids that are substantially non-soluble in an aqueous medium. Furthermore, a person skilled in the art will appreciate that small quantities of an aqueous medium (such as glycols, glycol ethers, glycol esters and alcohols) may be present in the organic liquids provided the overall organic liquid is substantially non-soluble in an aqueous medium.

Examples of organic liquids, which may be used as polar organic liquids are film-forming resins such as are suitable for the preparation of inks, paints and chips for use in various applications such as paints and inks. Examples of such resins include polyamides, such as Versamid^{™} and Wolfamid^{™}, and cellulose ethers, such as ethyl cellulose and ethyl hydroxyethyl cellulose, nitrocellulose and cellulose acetate butyrate resins, including mixtures thereof. Examples of paint resins include short oil alkyd/melamine-formaldehyde, polyester/melamine-formaldehyde, thermosetting acrylic/melamine-formaldehyde, long oil alkyd, medium oil alkyd, short oil alkyd, polyether polyols and multi-media resins such as acrylic and urea/aldehyde.

The organic liquid may be a polyol, that is to say, an organic liquid with two or more hydroxyl groups. In one embodiment, polyols include alpha-omega diols or alpha-omega diol ethoxylates.

In one embodiment, non-polar organic liquids are compounds containing aliphatic groups, aromatic groups or mixtures thereof. The non-polar organic liquids include non-halogenated aromatic hydrocarbons (e.g. toluene and xylene), halogenated aromatic hydrocarbons (e.g. chlorobenzene, dichlorobenzene, chlorotoluene), non-halogenated aliphatic hydrocarbons (e.g. linear and branched aliphatic hydrocarbons containing six or more carbon atoms both fully and partially saturated), halogenated aliphatic hydrocarbons (e.g. dichloromethane, carbon tetrachloride, chloroform, trichloroethane) and natural non-polar organics (e.g. vegetable oil, sunflower oil, rapeseed oil, linseed oil, terpenes and glycerides).

In one embodiment, the organic liquid comprises at least 0.1% by weight, or 1% by weight or more of a polar organic liquid based on the total organic liquid. In one embodiment, the organic liquid is free of water.

In one embodiment of the invention, the dispersant polymer of the present invention may be used in a plastics material. In one embodiment, the plastics material may be a thermosetting resin. The thermosetting resins useful in this invention include resins which undergo a chemical reaction when heated, catalyzed, or subject to ultra-violet, laser light, infra-red, cationic, electron beam, or microwave radiation and become relatively infusible. Typical reactions in thermosetting resins include oxidation of unsaturated double bonds, reactions involving epoxy/amine, epoxy/carbonyl, epoxy/hydroxyl, reaction of epoxy with a Lewis acid or Lewis base, polyisocyanate/hydroxy, amino resin/hydroxy moieties, free radical reactions or polyacrylate, cationic polymerization of epoxy resins and vinyl ether and condensation of silanol. Examples of unsaturated resins include polyester resins made by the reaction of one or more diacids or anhydrides with one or more diols. Such resins are commonly supplied as a mixture with a reactive monomer such as styrene or vinyltoluene and are often referred to as orthophthalic resins and isophthalic resins. Further examples include resins using dicyclopentadiene (DCPD) as a co-reactant in the polyester chain. Further examples also include the reaction products of bisphenol A diglycidyl ether with unsaturated carboxylic acids such as methacrylic acid, subsequently supplied as a solution in styrene, commonly referred to as vinyl ester resins.

In one embodiment, the thermosetting composite or thermosetting plastic may be a polyester, a polyvinyl acetate, a polyester resin in styrene, a polystyrene, or mixtures thereof.

Polymers with hydroxy functionality (frequently polyols) are widely used in thermosetting systems to crosslink with amino resins or polyisocyanates. The polyols include acrylic polyols, alkyd polyols, polyester polyols, polyether polyols and polyurethane polyols. Typical amino resins include melamine formaldehyde resins, benzoguanamine formaldehyde resins, urea formaldehyde resins and glycoluril formaldehyde resins. Polyisocyanates are resins with two or more isocyanate groups, including both monomeric aliphatic diisocyanates, monomeric aromatic diisocyanates and their polymers. Typical aliphatic diisocyanates include hexamethylene diisocyanate, isophorone diisocyanate and hydrogenated diphenylmethane diisocyanate. Typical aromatic isocyanates include toluene diisocyanates and diphenylmethane diisocyanates.

If desired, the dispersions of the present invention may contain other ingredients, for example resins (where these do not already constitute the organic medium), binders, co-solvents, cross-linking agents, fluidising agents, wetting agents, anti-sedimentation agents, plasticisers, surfactants, dispersants other than the compound of the present invention, humectants, anti-foamers, anti-cratering agents, rheology modifiers, heat stabilizers, light stabilizers, UV absorbers, antioxidants, leveling agents, gloss modifiers, biocides and preservatives.

The compositions typically contain from 1 to 95% by weight of the particulate solid, the precise quantity depending on the nature of the solid and the quantity depending on the nature of the solid and the relative densities of the solid and the polar organic liquid. For example, a composition in which the solid is an organic material, such as an organic pigment, in one embodiment contains from 15 to 60% by weight of the solid whereas a composition in which the solid is an inorganic material, such as an inorganic pigment, filler or extender, in one embodiment contains from 40 to 90% by weight of the solid based on the total weight of composition.

The compositions containing an organic liquid may be prepared by any of the conventional methods known for preparing dispersions. Thus, the solid, the organic medium and the dispersant polymer may be mixed in any order, the mixture then being subjected to a mechanical treatment to reduce the particles of the solid to an appropriate size, for example by high speed mixing, ball milling, basket milling, bead milling, gravel milling, sand grinding, attrition grinding, two roll or three roll milling, plastic milling until the dispersion is formed. Alternatively, the solid may be treated to reduce its particle size independently or in admixture with either the organic medium or the dispersant, the other ingredient or ingredients then being added and the mixture being agitated to provide the composition. The composition can also be made by grinding or milling the dry solid with the dispersant and then adding the liquid medium or mixing the solid with the dispersant in a liquid medium in a pigment flushing process.

The composition of the present invention is particularly suited to liquid dispersions. In one embodiment, such dispersion compositions comprise:
a) from 0.5 to 80 parts of a particulate solid;
b) from 0.1 to 79.6 parts of a polymer/dispersant of Formula 1; and
c) from 19.9 to 99.4 parts of an organic liquid.
wherein all relative parts are by weight and the amounts (a) +(b) +(c) = 100.

If a composition is required comprising a particulate solid and a dispersant of Formula 1 in dry form, the organic liquid is typically volatile so that it may be readily removed from the particulate solid by a simple separation means such as evaporation. In one embodiment, the composition comprises the organic liquid.

If the dry composition consists essentially of the dispersant of formula (1) and the particulate solid, it typically contains at least 0.2%, at least 0.5% or at least 1.0% dispersant of Formula 1 based on weight of the particulate solid. In one embodiment, the dry composition contains not greater than 100%, not greater than 50%, not greater than 20% or not greater than 10% by weight of dispersant of Formula 1 based on the weight of the particulate solid.

As disclosed herein, the compositions of the invention are suitable for preparing millbases wherein the particulate solid is milled in an organic liquid in the presence of a compound for Formula 1.

Thus, according to a still further aspect of the invention, there is provided a millbase comprising a particulate solid, an organic liquid and a polymer of Formula (1).

Typically, the millbase contains from 20 to 70% by weight particulate solid based on the total weight of the millbase. In one embodiment, the particulate solid is not less than 10 or not less than 20% by weight of the millbase. Such millbases may optionally contain a binder added either before or after milling.

In one embodiment, the binder is a polymeric material capable of binding the composition on volatilisation of the organic liquid.

Binders are polymeric materials including natural and synthetic materials. In one embodiment, binders include poly(meth)acrylates, polystyrenics, polyesters, polyurethanes, alkyds, polysaccharides such as cellulose, nitrocellulose, and natural proteins such as casein. The binder may be nitrocellulose. In one embodiment, the binder is present in the composition at more than 100% based on the amount of particulate solid, more than 200%, more than 300% or more than 400%.

The amount of optional binder in the millbase can vary over wide limits but is typically not less than 10%, and often not less than 20% by weight of the continuous/liquid phase of the millbase. In one embodiment, the amount of binder is not greater than 50% or not greater than 40% by weight of the continuous/liquid phase of the millbase.

The amount of dispersant in the millbase is dependent on the amount of particulate solid but is typically from 0.5 to 5% by weight of the millbase.

Dispersions and millbases made from the composition of the invention are particularly suitable for use in non-aqueous and solvent free formulations in which energy curable systems (ultra-violet, laser light, infra-red, cationic, electron beam, microwave) are employed with monomers, oligomers, etc. or a combination present in the formulation. They are particularly suitable for use in coatings such as paints, varnishes, inks, other coating materials and plastics. Suitable examples include their use in low, medium and high solids paints, general industrial paints including baking, two component and metal coating paints such as coil and can coatings, powder coatings, UV-curable coatings, wood varnishes; inks, such as flexographic, gravure, offset, lithographic, letterpress or relief, screen printing and printing inks for packaging printing, non-impact inks such as inkjet inks including continuous inkjet and drop on demand inkjet which include thermal, piezo and electrostatic, phase change inks and hot melt wax inks, inks for ink-jet printers and print varnishes such as overprint varnishes; polyol and plastisol dispersions; non-aqueous ceramic processes, especially tape-casting, gel-casting, doctor-blade, extrusion and injection moulding type processes, a further example would be in the preparation of dry ceramic powders for isostatic pressing; composites such as sheet moulding and bulk moulding compounds, resin transfer moulding, pultrusion, hand-lay-up and spray-lay-up processes, matched die moulding; construction materials like casting resins, cosmetics, personal care like nail coatings, sunscreens, adhesives, toners such as liquid toners, plastics materials and electronic materials such as coating formulations for color filter systems in displays including organic light-emitting diode (OLED) devices, liquid crystal displays and electrophoretic displays, glass coatings including optical fiber coatings, reflective coatings or anti-reflective coatings, conductive and magnetic inks and coatings. They are useful in the surface modification of pigments and fillers to improve the dispersibility of dry powders used in the above applications. Further examples of coating materials are given in Bodo Muller, Ulrich Poth, Lackformulierung und Lackrezeptur, Lehrbuch fr Ausbildung und Praxis, Vincentz Verlag, Hanover (2003) and in P.G.Garrat, Strahlenhartung, Vincentz Verlag, Hanover (1996). Examples of printing ink formulations are given in E.W.Flick, Printing Ink and Overprint Varnish Formulations - Recent Developments, Noyes Publications, Park Ridge NJ, (1990) and subsequent editions.

In one embodiment, the composition of the invention further includes one or more additional known dispersants.

The following examples provide illustrations of the invention. These examples are non exhaustive and are not intended to limit the scope of the invention.

### EXAMPLES

### Reagents

Lauric acid from Sigma Aldrich; ε-Caprolactone from Perstorp; Lactide from Nature works, grade M3002, >35% D-lactic equivalent; Zirconium (IV) butoxide solution from Sigma Aldrich; 80wt. % in 1-butanol Acetic anhydride from Fisher Scientific; Epomin SP018 polyethyleneimine from Nippon Shokubai, MW 1800, δ-Valerolactone from Sigma Aldrich; 2,2-bis(hydroxymethyl)butyric acid from Sigma Aldrich; 2,2-bis(hydroxymethyl)propionic acid from Sigma Aldrich; 1,2,4-benzenetricarboxylic anhydride from Sigma Aldrich; Poly(ethylene glycol) monomethyl ether from Sigma Aldrich, MW 500; Epomin SP200 polyethyleneimine from Nippon Shokubai, MW 10000; Lupasol PEI-98 polyethyleneimine from BASF, MW 20000; Phthalic anhydride from Sigma Aldrich; Dimethyl sulfate from Sigma Aldrich; Ethyl acrylate from Sigma Aldrich; US6,197,877 Example 198 - this is made in accordance to the example 198 from US patent 6,197,877, with the exception that amine diethanolamine is not added and hence the material is present in its acid form; Orthophosphoric acid from Sigma Aldrich, 85% in water. All polyester intermediate reactions were monitored by gel permeation chromatography by observing the consumption of all monomers.

### Polyester Intermediate 1

**PE1-1:** A polyester intermediate was prepared as set forth in US Pat. No. 6,197,877, Example 19.
**PE1-2:** A polyester intermediate was prepared as set forth in EP Pat. No. 0208041 intermediate 3.
**PE1-3:** A polyester intermediate was prepared as set forth in EP Pat. No. 0240160 dispersant 1.
**PE1-4:** Charged caprolactone (46.22 parts), valerolactone (40.55 parts), lauric acid (27.04 parts) and 2,2-bis(hydroxymethyl)butyric acid (10.00 parts) to reaction vessel and heated to 120C. After 1 hour at 120C charged zirconium (IV) butoxide solution (0.37 parts) and increased temperature to 180C. After 54 hours reaction stopped to yield a yellow liquid, with an acid value of 22.66mgKOH/g.

### Polyester Intermediate 2

**PE2-1:** Charged caprolactone (3560 parts), lactide (1746 parts) and Lauric acid (694 parts) to reaction vessel and heated to 100C under nitrogen with stirring. Charged Zirconium (IV) butoxide solution (42 parts) and increased the temperature to 180C. After 7 hours reaction stopped to yield a brown liquid.
**PE2-2:** Charged caprolactone (441.80 parts), lactide (216.89 parts) and Lauric acid (86.07 parts) to reaction vessel and heated to 120C under nitrogen with stirring. After 1 hour at 120C charged Zirconium (IV) butoxide solution (6.74 parts) and increased the temperature to 180C. After 18 hours reaction stopped to yield a brown liquid.
**PE2-3:** Charged dodecanol (90.64 parts), caprolactone (500 parts) and lactide (245.61 parts) to reaction vessel and heated to 120C under nitrogen with stirring. After ½ an hour at 120C charged Zirconium (IV) butoxide solution (2.51 parts) and increased the temperature to 180C. After 14 hours reaction stopped and poured off. 353.4 parts of this material was charged to a new reaction vessel and heated to 90C under nitrogen, polyphosphoric acid (16.33 parts, pre-heated to 70C) was charged to the reaction vessel and stirred for 9 hours.
**PE2-4:** Charged dodecanol (90.64 parts), caprolactone (500 parts) and lactide (245.61 parts) to reaction vessel and heated to 120C under nitrogen with stirring. After ½ an hour at 120C charged Zirconium (IV) butoxide solution (2.51 parts) and increased the temperature to 180C. After 14 hours reaction stopped and poured off. 345.54 parts of this material was charged to a new reaction vessel and heated to 90C under nitrogen, polyphosphoric acid (17.68 parts, pre-heated to 70C) was charged to the reaction vessel and stirred for 9 hours.

It should be noted that PE2-3 and PE2-4 could each, independently, be used as a dispersant, particularly for inorganic pigments.
**PE2-5:** Charged caprolactone (140.31 parts), lactide (46.77 parts) and lauric acid (25.00 parts) to reaction vessel and heated to 120C under nitrogen with stirring. After 1 hour at 120C charged zirconium (IV) butoxide solution (0.64 parts) and increased the temperature to 180C. After 18 hours reaction stopped to yield a brown wax.
**PE2-6:** Charged caprolactone (79.61 parts), lactide (100.53 parts) and poly(ethylene glycol)monomethyl ether (75.00 parts) to reaction vessel and heated to 120C under nitrogen with stirring. After 1 hour at 120C charged zirconium (IV) butoxide solution (0.77 parts) and increased the temperature to 180C. After 20 and ½ hours reaction stopped and poured off. 79.00 parts of this material was charged to a new reaction vessel and heated to 70C under nitrogen, 1,2,4-tricarboxylic anhydride (9.27 parts) was charged to the reaction vessel and increased temperature to 120C. After 34 hours reaction stopped to yield an orange liquid.
**PE2-7:** Charged caprolactone (51.06 parts), lactide (64.47 parts), lauric acid (29.87 parts) and 2,2-bis(hydroxymethyl)propionic acid (10.00 parts) to reaction vessel and heated to 120C under nitrogen with stirring. After 1 hour at 120C charged zirconium (IV) butoxide solution (0.47 parts) and increased the temperature to 180C. After 21 hours reaction stopped to yield a yellow liquid.

### (PE1)ₚ-MA Intermediates

**(PE1)ₚ-MA-1:** Charged PE1 Intermediate 1 (450.28 parts) to reaction vessel and heated to 70C under nitrogen with stirring. Charged Epomin SP018 (115.56 parts, which had been pre-heated to 70C) and increased the temperature to 150C, after 18 hours reduced the temperature and charged Dibutyltin dilaurate (1.35 parts) and increased temperature to 150C for 18 hours. This yielded a brown solid with acid value of 12.15mgKOH/g and base equivalence of 689.36.
**(PE1)ₚ-MA-2:** Charged PE1 Intermediate 1 (600 parts) to reaction vessel and heated to 70C under nitrogen with stirring. Charged Epomin SP200 (141.18 parts, which had been pre-heated to 70C) and increased the temperature to 140C. This yielded a brown solid with base equivalence of 645.
**(PE1)p-MA-3:** Charged PE1-2 (79.36 parts) to reaction vessel and heated to 70C under nitrogen with stirring. Charged Epomin SP018 (20.34 parts, which had been pre-heated to 70C) and increased the temperature to 150C. After 22 and ½ hours reaction stopped. This yielded a brown liquid with acid value of 8.18 mgKOH/g and base equivalence of 467.97 mg.
**(PE1)p-MA-4:** Charged PE1-3 (40.00 parts) to reaction vessel and heated to 70C under nitrogen with stirring. Charged Lupasol PEI-98 (10.00 parts, which had been pre-heated to 70C) and increased the temperature to 150C. After 20 hours reaction stopped. This yielded a viscous brown liquid paste with acid value of 9.06 mgKOH/g and base equivalence of 472.35 mg.
**(PE1)p-MA-5:** Charged PE1-4 (32.00 parts) to reaction vessel and heated to 70C under nitrogen with stirring. Charged Epomin SP018 (8.00 parts, which had been pre-heated to 70C) and increased the temperature to 150C. After 28 hours reaction stopped. This yielded a brown liquid with acid value of 19.05 mgKOH/g and base equivalence of 640.15 mg.

### Dispersant Examples

**Comparative Ex. 1:** Using the method described for Example 30 in US Pat. No. 6,197,877: Charged PE2-1 (77.47 parts) to reaction vessel and heated to 70C under nitrogen with stirring, then charged Epomin SP018 (5.95 parts had been pre-heated to 70C). Stirred for 6 hours at 120C. This yielded a brown paste with an acid value of 42.2mgKOH/g and a base equivalence of 2013.9.

**Comparative Ex. 2:** Using the method described for Example 30 in US Pat. No. 6,197,877: Charged PE2-1 (81.65 parts) to reaction vessel and heated to 70C under nitrogen with stirring, then charged Epomin SP200 (6.28 parts had been pre-heated to 70C). Stirred for 6 hours at 120C. This yielded a brown paste with an acid value of 37.55mgKOH/g and a base equivalence of 1874.06.

**Comparative Ex. 3:** Using the method described for Example 30 in US Pat. No. 6,197,877: Charged PE2-5 (70.00 parts) to reaction vessel and heated to 70C under nitrogen with stirring, then charged Epomin SP200 (5.38 parts had been pre-heated to 70C). Stirred for 6 hours at 120C. This yielded a brown wax with an acid value of 39.74 mgKOH/g and a base equivalence of 1948.29 mg.

**Inventive Ex. 1:** Charged (PE1)ₚ-MA-1 (312.81 parts) to reaction vessel and heated to 70C under nitrogen with stirring, then charged PE2-2 (581.44 parts) and increased the temperature to 90C. After 1 hour reaction stopped to yield a brown paste with an acid value of 22.66mgKOH/g and a base equivalence of 1794.69.

**Inventive Ex. 2:** Charged (PE1)ₚ-MA-2 (113.84 parts) to reaction vessel and heated to 70C under nitrogen with stirring, then charged PE2 Intermediate 3 (363.22 parts, which had been pre-heated to 70C). After 1 and ½ hours reaction stopped to yield a brown paste with an acid value of 65.36mgKOH/g and a base equivalence of 3334.68.

**Inventive Ex. 3:** Charged (PE1)ₚ-MA-2 (115.88 parts) to reaction vessel and heated to 70C under nitrogen with stirring, then charged PE2 Intermediate 4 (369.72 parts, which had been pre-heated to 70C). After 1 and ½ hours reaction stopped to yield a brown paste with an acid value of 50.31mgKOH/g and a base equivalence of 3250.30.

**Inventive Ex. 4:** Charged Inventive Ex. 1 (50.00 parts) to a reaction vessel and heated to 70°C under nitrogen, then charged phthalic anhydride (1.00 parts) and Dowanol MPA (51.00 parts), which had been pre heated to 70°C. After one hour, stopped the reaction to yield a brown solution, with an acid value of 16.33 mgKOH/g and a base equivalence of 4671.71 mg.

**Inventive Ex. 5:** Charged Inventive Ex. 1 (50.00 parts) and Dowanol MPA (51.00 parts) to a reaction vessel and heated to 70°C under nitrogen, then charged dimethylsulphate (1.00 parts). After one hour, stopped the reaction to yield a brown solution, with an acid value of 15.20 mgKOH/g and a base equivalence of 7258.91 mg.

**Inventive Ex. 6:** Charged Inventive Ex. 1 (50.00 parts) to a reaction vessel and heated to 70°C under nitrogen, then charged ethyl acrylate (1.00 parts). After one hour, stopped the reaction to yield a brown paste, with an acid value of 28.50 mgKOH/g and a base equivalence of 2304.69 mg.

**Inventive Ex. 7:** Charged Inventive Ex. 1 (50.00 parts) and Dowanol MPA (51.00 parts) to a reaction vessel and heated to 70°C under nitrogen, then charged caprolactone (1.00 parts). After one hour, stopped the reaction to yield a brown paste, with an acid value of 14.12 mgKOH/g and a base equivalence of 4587.28 mg.

**Inventive Ex. 8:** Charged Inventive Ex. 1 (50.00 parts) to a reaction vessel and heated to 70°C under nitrogen, then charged US6197877 Example 198 (1.00 parts), which had been pre heated to 70°C. After one hour, stopped the reaction to yield a brown paste, with an acid value of 26.25 mgKOH/g and a base equivalence of 2073.38 mg.

**Inventive Ex. 9:** Charged Inventive Ex. 1 (50.00 parts) to a reaction vessel and heated to 70°C under nitrogen, then charged ortho phosphoric acid (85%w/w, 1.00 parts). After one hour, stopped the reaction to yield a brown paste, with an acid value of 31.39 mgKOH/g and a base equivalence of 2287.33 mg.

**Inventive Ex. 10:** Charged (PE1)ₚ-MA-3 (26.25 parts) to reaction vessel and heated to 70C under nitrogen with stirring, then charged PE2-5 (48.75 parts) and increased the temperature to 90C. After 1 hour reaction stopped to yield a yellow solid paste with an acid value of 24.46 mgKOH/g and a base equivalence of 1565.88 mg.

**Inventive Ex. 11:** Charged (PE1)ₚ-MA-3 (26.25 parts) to reaction vessel and heated to 70C under nitrogen with stirring, then charged PE2-6 (48.75 parts). After 2 hours increased the temperature to 90C. After 1 hour reaction stopped to yield a viscous brown liquid paste with an acid value of 52.93 mgKOH/g and a base equivalence of 2175.09 mg.

**Inventive Ex. 12:** Charged (PE1)ₚ-MA-4 (18.27 parts) to reaction vessel and heated to 90C under nitrogen, then charged PE2-7 (33.93 parts) with stirring. After 2 and ½ hours reaction stopped to yield a viscous brown liquid paste with an acid value of 43.98 mgKOH/g and a base equivalence of 1842.30 mg.

**Inventive Ex. 13:** Charged (PE1)ₚ-MA-5 (16.40 parts) to reaction vessel and heated to 70C under nitrogen with stirring, then charged PE2-1 (30.46 parts) and increased the temperature to 90C. After 1 hour reaction stopped to yield a viscous brown liquid paste with an acid value of 29.67 mgKOH/g and a base equivalence of 1961.54 mg.

### APPLICATION TESTING

**Application Testing Reagents:** Dowanol MPA - from sigma Aldrich; Xylene:Butan-1-ol (2.5:1) mixture from Fisher Scientific; Regal Black 400R - from Cabot; Heliogen Blue L7101F from BASF; 3mm Glass beads - from Sigmund Lindner.

### Application Results

Each Dispersant (0.6 parts) indicated in Table 1 below was added to an 8 dram vial and Dowanol MPA (6.40 parts) was added. The dispersant was then dissolved by shaking and heating as necessary. When the dispersant was dissolved, 3mm glass beads (17 parts) were added, followed by Regal Black 400R (3 parts). The vials where then sealed and shaken on a horizontal shaker for 16 hours. The resulting dispersion was then assessed for fluidity using an arbitrary scale of A to E (good to bad).

**Table 1 Pigment Dispersion Results**

| Dispersant | Fluidity Grade |
|---|---|
| Inventive Ex. 1 | A |
| Comparative Example 1 | D |
| Inventive Ex. 4 | A |
| Inventive Ex. 5 | A |
| Inventive Ex. 6 | A |
| Inventive Ex. 7 | A |
| Inventive Ex. 8 | A |
| Inventive Ex. 9 | A |

Dowanol MPA (4.67 parts) and each Millbase (0.02 parts) indicated in Table 1 were added to a 1.75 dram vial and mixed thoroughly. Particle size analysis was then carried out for each dispersion indicated in Table 1 using a Nanotrac Wave particle size analyser. D50 and D90 values were obtained from intensity-based distributions.

**Table 2 Particle Size Analysis results**

| Dispersant | Particle Size D50 / nm | Particle Size D90 / nm |
|---|---|---|
| Comparative Ex. 1 | 212.3 | 405.0 |
| Inventive Ex. 1 | 131.4 | 185.7 |
| Inventive Ex. 4 | 129.5 | 180.6 |
| Inventive Ex. 5 | 136.6 | 205.8 |
| Inventive Ex. 6 | 136.2 | 193.7 |
| Inventive Ex. 7 | 127.0 | 204.6 |
| Inventive Ex. 8 | 129.6 | 174.7 |
| Inventive Ex. 9 | 160.9 | 160.9 |

Each Dispersant (0.2 parts) indicated in Table below was added to an 8 dram vial and Dowanol MPA (8.25 parts) was added. The dispersant was then dissolved by shaking and heating as necessary. When the dispersant was dissolved, 3mm glass beads (17 parts) were added, followed by Heliogen Blue L7101F (1.55 parts). The vials where then sealed and shaken on a horizontal shaker for 16 hours. The resulting dispersion was then assessed for fluidity using an arbitrary scale of A to E (good to bad).

**Table 3 Pigment Dispersion Results**

| Dispersant | Fluidity grade |
|---|---|
| Comparative example 2 | D |
| Inventive Ex. 2 | B/C |
| Inventive Ex. 3 | B |

Each Dispersant (0.6 parts) indicated in Table 4 below was added to an 8 dram vial and Xylene:Butan-1-ol (6.40 parts) was added. The dispersant was then dissolved by shaking and heating as necessary. When the dispersant was dissolved, 3mm glass beads (17 parts) were added, followed by Regal Black 400R (3 parts). The vials where then sealed and shaken on a horizontal shaker for 16 hours. Particle size analysis was then carried out for each dispersion indicated in Table 4 using a Nanotrac Wave particle size analyser. D50 and D90 values were obtained from intensity-based distributions.

**Table 4 Pigment Dispersion Results**

| Dispersant | Particle Size D50 / nm | Particle Size D90 / nm |
|---|---|---|
| Comparative Ex. 1 | 1100 | 2253 |
| Comparative Ex. 3 | 1515 | 2249 |
| Inventive Ex. 1 | 142.5 | 224.6 |
| Inventive Ex. 10 | 149.4 | 241.3 |
| Inventive Ex. 11 | 616.0 | 866.0 |
| Inventive Ex. 12 | 208.2 | 347.0 |
| Inventive Ex. 13 | 567.0 | 679.0 |

As used herein, the transitional term "comprising", which is synonymous with "including", "containing," or "characterized by", is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the basic and novel characteristics of the composition or method under consideration. When referring to number average molecular weight (Mn) herein, the number average molecular weight should be considered to be measured by ebullioscopic method analysis.

## Claims

1. A dispersant of the following structure:
(PE1)ₚ-MA-(PE2)_{q}, wherein
(a) MA is a multiamine species having a number average molecular weight of 300 to 100,000 g/mol, wherein the number average molecular weight is measured by ebullioscope method analysis;
(b) PE1 is a polyester chain having a number average molecular weight (Mn) between 500 and 4,000 g/mole measured via titration against tetraethylammonium hydroxide, and having the formula R₁-(Q)_{b}-[OR₃-C(=O)]ₙ-(X)_{z}, wherein
(i) R₁ is H-, R₂C(=O)-, or R₂-O(C=O)-R₅-(C=O)-, wherein R₂ is a hydrocarbon chain containing 1 to 25 carbon atoms and R₅ is a hydrocarbon chain containing 1 to 20 carbon atoms,
(ii) Q is derived from a dihydroxyl mono-carboxylic acid having 4 to 7 carbon atoms and forms a branch point in the polyester chain and b is 0, 1, or 2.
(iii) R₃ is a hydrocarbon chain containing 3 to 25 carbon atoms or -R₄-OC(=O)R₅-, wherein R₄ is a hydrocarbon chain containing 2 to 30 carbon atoms and R₅ is a hydrocarbon chain containing 1 to 20 carbon atoms,
(iv) n is 3 to 43, and
(v) z is 0 or 1, wherein when z is 1, X is O⁻ and PE1 is attached to MA by a salt linkage and when z is 0, PE1 is attached to MA by an amide bond;
wherein PE1 is attached to MA by at least 10 mol% amide bonds;
(c) PE2 is a polyester chain having a number average molecular weight (Mn) between 500 and 4,000 g/mole measured via titration against tetraethylammonium hydroxide, and having the formula R₆-(T)ₘ-(Q)_{b}-(V)ᵣ-(Z)_{y}-O⁻, wherein
(i) y is 0 or 1, wherein when y is 0, R₆ is H- or R₂C(=O)-, when y is 1, R₆ is R₂O- or R₂O-(CH₂CHR₇O)ₛ- and s is 1 to 45 and Z is derived from a polyphosphoric acid, phosphorous pentoxide, or a 5 or 6 membered cyclic anhydride, and R₇ is H or CH₃ or CH₂CH₃;
(ii) Q is derived from a dihydroxyl mono-carboxylic acid having 4 to 15 carbon atoms and forms a branch point in the polyester chain and b is 0, 1, or 2,
(iii) T is a monomeric repeat unit derived from the polyesterification reaction of lactide, glycolide, lactic acid, or glycolic acid monomers and m is 1 to 50,
(iv) V is a repeat unit derived from the polyesterifaction of a lactone monomer having 4 to 12 carbon atoms or a hydroxyl carboxylic acid monomer having 4 to 20 carbon atoms,
(v) r is 0 to 30,
wherein PE2 is attached to a MA by a salt linkage, and wherein p and q are both at least 1, p+q is 2 to 800 and the relative ratio of p to q is from 90:10 to 10:90:
wherein PE1 does not contain a monomer derived from lactide, glycolide, lactic acid, or glycolic acid; and,
wherein Z can be selected from 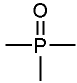 where Z connects two R₆-(T)ₘ-(Q)_{b}-(V)ᵣ chains and the third bond is attached to O⁻, 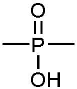 or 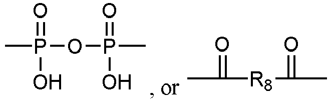 where R₈ is either a C2 or C3 alkyl carbon chain with optional C1-20 chain substituent, or a C6 or C10 aromatic structure with optional substituents from carboxylic acids, halides, C1-4 carbon chains or nitro groups.

2. The dispersant of claims 1 wherein R₇ is H.

3. The dispersant of claim 1 or claim 2 wherein p+q is, on average, from 4 to 200, or wherein the relative ratio of p to q is 50:50 to 20:80.

4. A method of preparing a polyester dispersant by reacting two different polyesters with a multiamine species, wherein the method comprises the steps of:
(a) providing a multiamine species (MA) having a number average molecular weight of 300 to 100,000 g/mol, wherein the number average molecular weight is measured by ebullioscope method analysis;
(b) providing a first polyester (PE1) having a number average molecular weight (Mn) between 500 and 4,000 g/mole measured via titration against tetraethylammonium hydroxide, wherein the first polyester does not contain a monomer unit derived from lactide, glycolide, lactic acid, or glycolic acid;
(c) reacting the PE1 with MA at a temperature above 100°C, wherein the first polyester is attached to the multi-amine species by at least 10 mol% amide bonds to form (PE1)ₚ-MA;
(d) providing a second polyester (PE2) having a number average molecular weight (Mn) between 500 and 4,000 g/mole measured via titration against tetraethylammonium hydroxide containing a monomeric repeat unit derived from the polyesterification of lactide, glycolide, lactic acid, or glycolic acid monomers;
(e) reacting PE2 with (PE1)ₚ-MA at a temperature below 100°C to form salt linkages between PE2 and (PE1)ₚ-MA to form (PE1)ₚ-MA-(PE2)_{q};
wherein p and q are both at least 1, p+q is between 2 and 800, and the relative ratio of p to q is from 90:10 to 10:90;
wherein PE 1 has the formula R₁-(Q)_{b}-[OR₃-C(=O)]ₙ-(X)_{z}, wherein
(i) R₁ is H- or R₂C(=O)-, or R₂-O(C=O)-R₅-(C=O) wherein R₂ is a hydrocarbon chain containing 1 to 25 carbon atoms and R₅ is a hydrocarbon chain containing 1 to 20 carbon atoms,
(ii) Q is derived from a dihydroxyl mono-carboxylic acid having 4 to 15 carbon atoms and forms a branch point in the polyester chain and b is 0, 1, or 2
(iii) R₃ is a hydrocarbon chain containing 3 to 25 carbon atoms or -R₄-OC(=O)R₅-, wherein R₄ is a hydrocarbon chain containing 2 to 30 carbon atoms,
(iv) n is 3 to 43, and
(v) z is 0 or 1, wherein when z is 1, X is O⁻ and PE1 is attached to MA by a salt linkage and when z is 0, PE1 is attached to MA by an amide bond; and
wherein PE2 is a polyester chain having the formula R₆-(T)ₘ-(Q)_{b}-(V)ᵣ-(Z)_{y}-O-, wherein
(i) y is 0 or 1, wherein when y is 0, R₆ is H- or R₂C(=O)-, when y is 1, R₆ is R₂O- or R₂O-(CH₂CHR₇O)ₛ- and s is 1 to 45 and Z is derived from a polyphosphoric acid, phosphorous pentoxide, or a 5 or 6 membered cyclic anhydride and R₇ is H or CH₃ or CH₂CH₃,
(ii) Q is derived from a dihydroxyl mono-carboxylic acid having 4 to 15 carbon atoms and forms a branch point in the polyester chain and b is 0, 1, or 2,
(iii) T is a monomeric repeat unit derived from the polyesterification reaction of lactide, glycolide, lactic acid, or glycolic acid monomers and m is 1 to 50,
(iv) V is a repeat unit derived from the polyesterifaction of a lactone monomer having 4 to 12 carbon atoms or a hydroxyl carboxylic acid monomer having 4 to 20 carbon atoms,
(v) r is 0 to 30; and
wherein step (c) comprises reacting PE1 with MA for 2 to 72 hours, and/or wherein step (e) comprises reacting PE2 with (PE1)ₚ-MA for 1 to 24 hours, and
wherein the method further comprises cooling the reaction product of step (c) [(PE1)ₚ-MA] to below 100°C before performing step (d).

5. The method of claim 4, wherein R₁ is H- or R₂C(=O)-.

6. The method of claim 4 or claim 5, wherein the relative ratio of p to q is from 50:50 to 20:80.

7. The method of any one of claims 4 to 6, wherein Z is derived from a polyphosphoric acid.

8. The method of any of claims 4 to 7 or the dispersant of any one of claims 1 to 3, wherein PE1 is attached to MA by at least 50 mol% amide bonds or wherein PE1 is attached to MA by 90 mol% amide bonds.

9. The method of any of claims 4 to 8 or the dispersant of any one of claims 1 to 3 or 8, wherein MA has a number average molecular weight of 600 to 50,000 g/mol.

10. The method of any of claims 4 to 9 or the dispersant of any one of claims 1 to 3, 8 or 9, wherein MA is selected from the group consisting of a non-polymeric alkyl amine with 3 or more nitrogen atoms, polyvinylamine, or polyallylamine.

11. The method of any of claims 4 to 10 or the dispersant of any one of claims 1 to 3 or 8 to 10,wherein MA comprises polyethyleneimine or modified polyethyleneimine.

12. The method of any of claims 4 to 11 further comprising step (f):
reacting (PE1)ₚ-MA-(PE2)_{q} with (a) an isocyanate, lactone, epoxy, anhydride, cyclic carbonate, (meth)acrylate via Michael addition reaction, and/or a polymeric species having a group that reacts with a primary or secondary amine to form a salt or covalent bond, (b) an oxidizing species that could convert the amine group to a nitric oxide, (c) a salification agent, or (d) a tertiary amine group of said multi-amine species or the dispersant containing the multi-amine species is reacted with a quaternization agent to form a quaternized amine group.

13. The method of any of claims 4 to 12 or the dispersant of any one of claims 1 to 3, or 8 to 11, wherein Q is derived from dihydroxyl mono-carboxylic acids selected from 2,2-Bis(hydroxymethyl)butyric acid, 2,2-Bis(hydroxymethyl)proponic acid, or mixtures thereof.

14. The use of the reaction product of the method of any of claims 4 to 13 as a dispersant.

15. A coating, paint, ink, or compounded rubber or plastic comprising a dispersed particulate solid, a continuous medium, and a dispersant compound, wherein the dispersant comprises the dispersant of claims 1 to 3, 8 to 11 or 13.

16. A coating, paint, ink, or compounded rubber or plastic comprising a dispersed particulate solid, a continuous medium, and a dispersant compound, wherein the dispersant comprises the dispersant obtained/obtainable by the method of any one of claims 4 to 13.

## Patentansprüche

1. Dispergiermittel der folgenden Struktur:
(PE1)ₚ-MA-(PE2)_{q}, wobei
(a) MA eine Multiaminspezies mit einem zahlenmittleren Molekulargewicht von 300 bis 100.000 g/mol ist, wobei das zahlenmittlere Molekulargewicht durch Ebullioskop-Verfahren-Analyse gemessen wird;
(b) PE1 eine Polyesterkette mit einem zahlenmittleren Molekulargewicht (Mn) zwischen 500 und 4.000 g/mol, gemessen mittels Titration gegen Tetraethylammoniumhydroxid, und mit der Formel R₁-(Q)_{b}-[OR₃-C(=O)]ₙ-(X)_{z} ist, wobei
(i) R₁ H-, R₂C(=O)- oder R₂-O(C=O)-R₅-(C=O)- ist, wobei R₂ eine Kohlenwasserstoffkette ist, die 1 bis 25 Kohlenstoffatome enthält, und R₅ eine Kohlenwasserstoffkette ist, die 1 bis 20 Kohlenstoffatome enthält,
(ii) Q von einer Dihydroxylmonocarbonsäure mit 4 bis 7 Kohlenstoffatomen abgeleitet ist und einen Verzweigungspunkt in der Polyesterkette bildet und b 0, 1 oder 2 beträgt.
(iii) R₃ eine Kohlenwasserstoffkette, die 3 bis 25 Kohlenstoffatome enthält, oder -R₄-OC(=O)R₅- ist, wobei R₄ eine Kohlenwasserstoffkette ist, die 2 bis 30 Kohlenstoffatome enthält, und R₅ eine Kohlenwasserstoffkette ist, die 1 bis 20 Kohlenstoffatome enthält,
(iv) n 3 bis 43 beträgt und
(v) z 0 oder 1 beträgt, wobei, wenn z 1 beträgt, X O⁻ ist und PE1 durch eine Salzverknüpfung an MA gebunden ist, und wenn z 0 beträgt, PE1 durch eine Amidbindung an MA gebunden ist;
wobei PE1 durch mindestens 10 Mol-% Amidbindungen an MA gebunden ist;
(c) PE2 eine Polyesterkette mit einem zahlenmittleren Molekulargewicht (Mn) zwischen 500 und 4.000 g/mol, gemessen mittels Titration gegen Tetraethylammoniumhydroxid, und mit der Formel R₆-(T)ₘ-(Q)_{b}-(V)ᵣ-(Z)_{y}-O⁻ ist, wobei
(i) y 0 oder 1 beträgt, wobei, wenn y 0 beträgt, R₆ H- oder R₂C(=O)- ist, wenn y 1 beträgt, R₆ R₂O- oder R₂O-(CH₂CHR₇O)ₛ- ist und s 1 bis 45 beträgt und Z von einer Polyphosphorsäure, Phosphorpentoxid oder einem 5- oder 6-gliedrigen cyclischen Anhydrid abgeleitet ist und R₇ H oder CH₃ oder CH₂CH₃ ist;
(ii) Q von einer Dihydroxylmonocarbonsäure mit 4 bis 15 Kohlenstoffatomen abgeleitet ist und einen Verzweigungspunkt in der Polyesterkette bildet und b 0, 1 oder 2 beträgt,
(iii) T eine monomere Wiederholungseinheit ist, die aus der Polyveresterungsreaktion von Lactid-, Glykolid-, Milchsäure- oder Glykolsäuremonomeren stammt, und m 1 bis 50 beträgt,
(iv) V eine Wiederholungseinheit ist, die aus der Polyveresterung eines Lactonmonomers mit 4 bis 12 Kohlenstoffatomen oder eines Hydroxylcarbonsäuremonomers mit 4 bis 20 Kohlenstoffatomen stammt,
(v) r 0 bis 30 beträgt,
wobei PE2 über eine Salzverknüpfung an ein MA gebunden ist, und wobei p und q beide mindestens 1 betragen, p + q 2 bis 800 beträgt und das relative Verhältnis von p zu q von 90 : 10 bis 10 : 90 beträgt;
wobei PE1 kein Monomer enthält, das von Lactid, Glykolid, Milchsäure oder Glykolsäure abgeleitet ist; und wobei Z ausgewählt sein kann aus 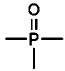 wobei Z zwei R₆-(T)ₘ-(Q)_{b}-(V)ᵣ-Ketten verbindet und die dritte Bindung an O⁻, 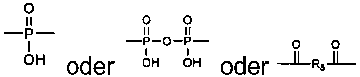 gebunden ist, wobei R₈ entweder eine C2- oder C3-Alkylkohlenstoffkette mit einem optionalen C1-20-Kettensubstituenten oder eine aromatische C6- oder C10-Struktur mit optionalen Substituenten aus Carbonsäuren, Halogeniden, C1-4-Kohlenstoffketten oder Nitrogruppen ist.

2. Dispergiermittel nach Anspruch 1, wobei R₇ H ist.

3. Dispergiermittel nach Anspruch 1 oder Anspruch 2, wobei p + q im Mittel von 4 bis 200 beträgt, oder wobei das relative Verhältnis von p zu q 50 : 50 bis 20 : 80 beträgt.

4. Verfahren zum Herstellen eines Polyester-Dispergiermittels durch Umsetzen von zwei verschiedenen Polyestern mit einer Multiaminspezies, wobei das Verfahren die folgenden Schritte umfasst:
(a) Bereitstellen einer Multiaminspezies (MA) mit einem zahlenmittleren Molekulargewicht von 300 bis 100.000 g/mol, wobei das zahlenmittlere Molekulargewicht durch Ebullioskop-Verfahren-Analyse gemessen wird;
(b) Bereitstellen eines ersten Polyesters (PE1) mit einem zahlenmittleren Molekulargewicht (Mn) zwischen 500 und 4.000 g/mol, gemessen mittels Titration gegen Tetraethylammoniumhydroxid, wobei der erste Polyester keine Monomereinheit enthält, die von Lactid, Glykolid, Milchsäure oder Glykolsäure abgeleitet ist;
(c) Umsetzen des PE1 mit MA bei einer Temperatur über 100 °C, wobei der erste Polyester durch mindestens 10 Mol-% Amidbindungen an die Multiaminspezies gebunden wird, um (PE1)ₚ-MA zu bilden;
(d) Bereitstellen eines zweiten Polyesters (PE2) mit einem zahlenmittleren Molekulargewicht (Mn) zwischen 500 und 4.000 g/mol, gemessen mittels Titration gegen Tetraethylammoniumhydroxid, das eine monomere Wiederholungseinheit enthält, die aus der Polyveresterung von Lactid-, Glykolid-, Milchsäure- oder Glykolsäuremonomeren stammt;
(e) Umsetzen von PE2 mit (PE1)ₚ-MA bei einer Temperatur unter 100 °C, um Salzverknüpfungen zwischen PE2 und (PE1)ₚ-MA zu bilden, um (PE1)ₚ-MA-(PE2)_{q} zu bilden;
wobei p und q beide mindestens 1 betragen, p + q zwischen 2 und 800 beträgt und das relative Verhältnis von p zu q von 90 : 10 bis 10 : 90 beträgt;
wobei PE 1 die Formel R₁-(Q)_{b}-[OR₃-C(=O)]ₙ-(X)_{z} aufweist, wobei
(i) R₁ H- oder R₂C(=O)- oder R₂-O(C=O)-R₅-(C=O)- ist, wobei R₂ eine Kohlenwasserstoffkette ist, die 1 bis 25 Kohlenstoffatome enthält, und R₅ eine Kohlenwasserstoffkette ist, die 1 bis 20 Kohlenstoffatome enthält,
(ii) Q von einer Dihydroxylmonocarbonsäure mit 4 bis 15 Kohlenstoffatomen abgeleitet ist und einen Verzweigungspunkt in der Polyesterkette bildet und b 0, 1 oder 2 beträgt
(iii) R₃ eine Kohlenwasserstoffkette, die 3 bis 25 Kohlenstoffatome enthält, oder -R₄-OC(=O)R₅- ist, wobei R₄ eine Kohlenwasserstoffkette ist, die 2 bis 30 Kohlenstoffatome enthält,
(iv) n 3 bis 43 beträgt und
(v) z 0 oder 1 beträgt, wobei, wenn z 1 beträgt, X O⁻ ist und PE1 über eine Salzverknüpfung an MA gebunden ist, und wenn z 0 beträgt, PE1 über eine Amidbindung an MA gebunden ist; und
wobei PE2 eine Polyesterkette mit der Formel R₆-(T)ₘ-(Q)_{b}-(V)ᵣ-(Z)_{y}-O-ist, wobei
(i) y 0 oder 1 beträgt, wobei, wenn y 0 beträgt, R₆ H- oder R₂C(=O)- ist, wenn y 1 beträgt, R₆ R₂O- oder R₂O-(CH₂CHR₇O)ₛ- ist und s 1 bis 45 beträgt und Z von einer Polyphosphorsäure, Phosphorpentoxid oder einem 5- oder 6-gliedrigen cyclischen Anhydrid abgeleitet ist und R₇ H oder CH₃ oder CH₂CH₃ ist,
(ii) Q von einer Dihydroxylmonocarbonsäure mit 4 bis 15 Kohlenstoffatomen abgeleitet ist und einen Verzweigungspunkt in der Polyesterkette bildet und b 0, 1 oder 2 beträgt,
(iii) T eine monomere Wiederholungseinheit ist, die aus der Polyveresterungsreaktion von Lactid-, Glykolid-, Milchsäure- oder Glykolsäuremonomeren stammt, und m 1 bis 50 beträgt,
(iv) V eine Wiederholungseinheit ist, die aus der Polyveresterung eines Lactonmonomers mit 4 bis 12 Kohlenstoffatomen oder eines Hydroxylcarbonsäuremonomers mit 4 bis 20 Kohlenstoffatomen stammt,
(v) r 0 bis 30 beträgt; und
wobei Schritt (c) das Umsetzen von PE1 mit MA für 2 bis 72 Stunden umfasst und/oder wobei Schritt (e) das Umsetzen von PE2 mit (PE1)ₚ-MA für 1 bis 24 Stunden umfasst und
wobei das Verfahren vor dem Durchführen von Schritt (d) ferner das Abkühlen des Reaktionsprodukts von Schritt (c) [(PE1)ₚ-MA] auf unter 100 °C umfasst.

5. Verfahren nach Anspruch 4, wobei R₁ H- oder R₂C(=O)- ist.

6. Verfahren nach Anspruch 4 oder Anspruch 5, wobei das relative Verhältnis von p zu q von 50 : 50 bis 20 : 80 beträgt.

7. Verfahren nach einem der Ansprüche 4 bis 6, wobei Z von einer Polyphosphorsäure abgeleitet ist.

8. Verfahren nach einem der Ansprüche 4 bis 7 oder das Dispergiermittel nach einem der Ansprüche 1 bis 3, wobei PE1 durch mindestens 50 Mol-% Amidbindungen an MA gebunden ist oder wobei PE1 durch 90 Mol-% Amidbindungen an MA gebunden ist.

9. Verfahren nach einem der Ansprüche 4 bis 8 oder das Dispergiermittel nach einem der Ansprüche 1 bis 3 oder 8, wobei MA ein zahlenmittleres Molekulargewicht von 600 bis 50.000 g/mol aufweist.

10. Verfahren nach einem der Ansprüche 4 bis 9 oder das Dispergiermittel nach einem der Ansprüche 1 bis 3, 8 oder 9, wobei MA ausgewählt ist aus der Gruppe, die aus einem nicht-polymeren Alkylamin mit 3 oder mehr Stickstoffatomen, Polyvinylamin oder Polyallylamin besteht.

11. Verfahren nach einem der Ansprüche 4 bis 10 oder das Dispergiermittel nach einem der Ansprüche 1 bis 3 oder 8 bis 10, wobei MA Polyethylenimin oder modifiziertes Polyethylenimin umfasst.

12. Verfahren nach einem der Ansprüche 4 bis 11, das ferner Schritt (f) umfasst:
Umsetzen von (PE1)ₚ-MA-(PE2)_{q} mit (a) einem Isocyanat, Lacton, Epoxid, Anhydrid, cyclischen Carbonat, (Meth)acrylat mittels einer Michael-Additionsreaktion und/oder einer polymeren Spezies, die eine Gruppe aufweist, die mit einem primären oder sekundären Amin reagiert, um ein Salz oder eine kovalente Bindung zu bilden, (b) einer oxidierenden Spezies, die die Amingruppe in ein Stickoxid umwandeln könnte, (c) einem Salzbildungsmittel oder wobei (d) eine tertiäre Amingruppe der Multiaminspezies oder des Dispergiermittels, das die Multiaminspezies enthält, mit einem Quaternisierungsmittel umgesetzt wird, um eine quaternisierte Amingruppe zu bilden.

13. Verfahren nach einem der Ansprüche 4 bis 12 oder das Dispergiermittel nach einem der Ansprüche 1 bis 3 oder 8 bis 11, wobei Q von Dihydroxylmonocarbonsäuren abgeleitet ist, die ausgewählt sind aus 2,2-Bis(hydroxymethyl)butansäure, 2,2-Bis(hydroxymethyl)propionsäure oder Mischungen davon.

14. Verwendung des Reaktionsprodukts des Verfahrens nach einem der Ansprüche 4 bis 13 als ein Dispergiermittel.

15. Beschichtung, Anstrichfarbe, Tinte oder zusammengesetzter Kautschuk oder Kunststoff, die einen dispergierten partikulären Feststoff, ein kontinuierliches Medium und eine Dispergiermittelverbindung umfassen, wobei das Dispergiermittel das Dispergiermittel der Ansprüche 1 bis 3, 8 bis 11 oder 13 umfasst.

16. Beschichtung, Anstrichfarbe, Tinte oder zusammengesetzter Kautschuk oder Kunststoff, die einen dispergierten partikulären Feststoff, ein kontinuierliches Medium und eine Dispergiermittelverbindung umfassen, wobei das Dispergiermittel das durch das Verfahren nach einem der Ansprüche 4 bis 13 erhaltene/erhältliches Dispergiermittel umfasst.

## Revendications

1. Dispersant de la structure suivante :
(PE1)ₚ-MA-(PE2)_{q}, dans lequel
(a) MA est une espèce multiamine ayant une masse moléculaire moyenne en nombre de 300 à 100 000 g/mol, dans lequel la masse moléculaire moyenne en nombre est mesurée par analyse selon la méthode de l'ébullioscope ;
(b) PE1 est une chaîne polyester ayant une masse moléculaire moyenne en nombre (Mn) comprise entre 500 et 4 000 g/mole mesurée par titrage avec de l'hydroxyde de tétraéthylammonium, et ayant la formule R₁-(Q)_{b}-[OR₃-C(=O)]ₙ-(X)_{z}, dans lequel
(i) R₁ est H-, R₂C(=O)-, ou R₂-O(C=O)-R₅-(C=O)-, dans lequel R₂ est une chaîne hydrocarbonée contenant 1 à 25 atomes de carbone et R₅ est une chaîne hydrocarbonée contenant 1 à 20 atomes de carbone,
(ii) Q est dérivé d'un acide dihydroxyl mono-carboxylique ayant de 4 à 7 atomes de carbone et forme un point de ramification dans la chaîne polyester et b vaut 0, 1 ou 2.
(iii) R₃ est une chaîne hydrocarbonée contenant de 3 à 25 atomes de carbone ou -R₄-OC(=O)R₅-, dans lequel R₄ est une chaîne hydrocarbonée contenant de 2 à 30 atomes de carbone et R₅ est une chaîne hydrocarbonée contenant de 1 à 20 atomes de carbone,
(iv) n vaut de 3 à 43, et
(v) z vaut 0 ou 1, dans lequel lorsque z vaut 1, X est O⁻ et PE1 est attaché à MA par une liaison sel et lorsque z vaut 0, PE1 est attaché à MA par une liaison amide ;
dans lequel PE1 est attaché à MA par au moins 10 % en moles de liaisons amide ;
(c) PE2 est une chaîne polyester ayant une masse moléculaire moyenne en nombre (Mn) comprise entre 500 et 4 000 g/mole mesurée par titrage avec de l'hydroxyde de tétraéthylammonium, et ayant la formule R₆-(T)ₘ-(Q)_{b}-(V)ᵣ-(Z)_{y}-O⁻, dans lequel
(i) y vaut 0 ou 1, dans lequel lorsque y vaut 0, R₆ est H- ou R₂C(=O)-, lorsque y vaut 1, R₆ est R₂O- ou R₂O-(CH₂CHR₇O)ₛ- et s vaut de 1 à 45 et Z est dérivé d'un acide polyphosphorique, de pentoxyde de phosphore, ou d'un anhydride cyclique à 5 ou 6 chaînons, et R₇ est H ou CH₃ ou CH₂CH₃ ;
(ii) Q est dérivé d'un acide dihydroxyl mono-carboxylique ayant de 4 à 15 atomes de carbone et forme un point de ramification dans la chaîne polyester et b vaut 0, 1 ou 2,
(iii) T est un motif de répétition monomère dérivé de la réaction de polyestérification de monomères de lactide, glycolide, acide lactique, ou acide glycolique et m vaut de 1 à 50,
(iv) V est un motif de répétition dérivé de la polyestérification d'un monomère de lactone ayant de 4 à 12 atomes de carbone ou d'un monomère d'acide hydroxylcarboxylique ayant de 4 à 20 atomes de carbone,
(v) r vaut de 0 à 30,
dans lequel PE2 est attaché à une MA par une liaison sel, et dans lequel p et q valent tous deux au moins 1, p + q vaut de 2 à 800 et le rapport relatif de p à q va de 90:10 à 10:90 ;
dans lequel PE1 ne contient pas de monomère dérivé de lactide, glycolide, acide lactique, ou acide glycolique ; et, dans lequel Z peut être choisi parmi 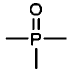 où Z relie deux chaînes R₆-(T)ₘ-(Q)_{b}-(V)ᵣ et la troisième liaison est attachée à O⁻, 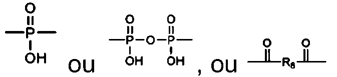 où R₈ est soit une chaîne carbonée alkyle en C2 ou C3 avec un substituant de chaîne en C1-20 facultatif, soit une structure aromatique en C6 ou C10 avec des substituants facultatifs provenant d'acides carboxyliques, d'halogénures, de chaînes carbonées en C1-4 ou de groupes nitro.

2. Dispersant selon les revendications 1, dans lequel R₇ est H.

3. Dispersant selon la revendication 1 ou la revendication 2, dans lequel p + q va, en moyenne, de 4 à 200, ou dans lequel le rapport relatif de p à q est de 50:50 à 20:80.

4. Procédé de préparation d'un dispersant de polyester par réaction de deux polyesters différents avec une espèce multiamine, dans lequel le procédé comprend les étapes consistant à :
(a) fournir une espèce multiamine (MA) ayant une masse moléculaire moyenne en nombre de 300 à 100 000 g/mol, dans lequel la masse moléculaire moyenne en nombre est mesurée par analyse selon la méthode de l'ébullioscope ;
(b) fournir un premier polyester (PE1) ayant une masse moléculaire moyenne en nombre (Mn) comprise entre 500 et 4 000 g/mole mesurée par titrage avec de l'hydroxyde de tétraéthylammonium, dans lequel le premier polyester ne contient pas de motif monomère dérivé de lactide, glycolide, acide lactique, ou acide glycolique ;
(c) faire réagir le PE1 avec MA à une température au-dessus de 100 °C, dans lequel le premier polyester est attaché à l'espèce multiamine par au moins 10 % en moles de liaisons amide pour former (PE1)ₚ-MA ;
(d) fournir un second polyester (PE2) ayant une masse moléculaire moyenne en nombre (Mn) comprise entre 500 et 4 000 g/mole mesurée par titrage avec de l'hydroxyde de tétraéthylammonium contenant un motif de répétition monomère dérivé de la polyestérification de monomères de lactide, glycolide, acide lactique, ou acide glycolique ;
(e) faire réagir PE2 avec (PE1)ₚ-MA à une température en dessous de 100 °C pour former des liaisons sel entre PE2 et (PE1)ₚ-MA pour former (PE1)ₚ-MA-(PE2)_{q} ;
dans lequel p et q valent tous deux au moins 1, p + q est compris entre 2 et 800, et le rapport relatif de p à q va de 90:10 à 10:90 ;
dans lequel PE1 a la formule R₁-(Q)_{b}-[OR₃-C(=O)]ₙ-(X)_{z}, dans lequel
(i) R₁ est H- ou R₂C(=O)-, ou R₂-O(C=O)-R₅-(C=O) dans lequel R₂ est une chaîne hydrocarbonée contenant 1 à 25 atomes de carbone et R₅ est une chaîne hydrocarbonée contenant 1 à 20 atomes de carbone,
(ii) Q est dérivé d'un acide dihydroxyl mono-carboxylique ayant de 4 à 15 atomes de carbone et forme un point de ramification dans la chaîne polyester et b vaut 0, 1, ou 2
(iii) R₃ est une chaîne hydrocarbonée contenant de 3 à 25 atomes de carbone ou -R₄-OC(=O)R₅-, dans lequel R₄ est une chaîne hydrocarbonée contenant de 2 à 30 atomes de carbone,
(iv) n vaut de 3 à 43, et
(v) z vaut 0 ou 1, dans lequel lorsque z vaut 1, X est O⁻ et PE1 est attaché à MA par une liaison sel et lorsque z vaut 0, PE1 est attaché à MA par une liaison amide ; et
dans lequel PE2 est une chaîne polyester ayant la formule R₆-(T)ₘ-(Q)_{b}-(V)ᵣ-(Z)_{y}-O-, dans lequel
(i) y vaut 0 ou 1, dans lequel lorsque y vaut 0, R₆ est H- ou R₂C(=O)-, lorsque y vaut 1, R₆ est R₂O- ou R₂O- (CH₂CHR₇O)ₛ- et s vaut de 1 à 45 et Z est dérivé d'un acide polyphosphorique, de pentoxyde de phosphore, ou d'un anhydride cyclique à 5 ou 6 chaînons et R₇ est H ou CH₃ ou CH₂CH₃,
(ii) Q est dérivé d'un acide dihydroxyl mono-carboxylique ayant de 4 à 15 atomes de carbone et forme un point de ramification dans la chaîne polyester et b vaut 0, 1 ou 2,
(iii) T est un motif de répétition monomère dérivé de la réaction de polyestérification de monomères de lactide, glycolide, acide lactique, ou acide glycolique et m vaut de 1 à 50,
(iv) V est un motif de répétition dérivé de la polyestérification d'un monomère de lactone ayant de 4 à 12 atomes de carbone ou d'un monomère d'acide hydroxylcarboxylique ayant de 4 à 20 atomes de carbone,
(v) r vaut de 0 à 30 ; et
dans lequel l'étape (c) comprend la réaction de PE1 avec MA pendant 2 à 72 heures, et/ou dans lequel l'étape (e) comprend la réaction de PE2 avec (PE1)ₚ-MA pendant 1 à 24 heures, et
dans lequel le procédé comprend en outre le refroidissement du produit de réaction de l'étape (c) [(PE1)ₚ-MA] en dessous de 100 °C avant la réalisation de l'étape (d).

5. Procédé selon la revendication 4, dans lequel R₁ est H- ou R₂C(=O)-.

6. Procédé selon la revendication 4 ou la revendication 5, dans lequel le rapport relatif de p à q va de 50:50 à 20:80.

7. Procédé selon l'une quelconque des revendications 4 à 6, dans lequel Z est dérivé d'un acide polyphosphorique.

8. Procédé selon l'une quelconque des revendications 4 à 7 ou dispersant selon l'une quelconque des revendications 1 à 3, dans lequel PE1 est attaché à MA par au moins 50 % en moles de liaisons amide ou dans lequel PE1 est attaché à MA par 90 % en moles de liaisons amide.

9. Procédé selon l'une quelconque des revendications 4 à 8 ou dispersant selon l'une quelconque des revendications 1 à 3 ou 8, dans lequel MA a une masse moléculaire moyenne en nombre de 600 à 50 000 g/mol.

10. Procédé selon l'une quelconque des revendications 4 à 9 ou dispersant selon l'une quelconque des revendications 1 à 3, 8 ou 9, dans lequel MA est choisie dans le groupe constitué d'une alkylamine non polymère ayant 3 atomes d'azote ou plus, polyvinylamine, ou polyallylamine.

11. Procédé selon l'une quelconque des revendications 4 à 10 ou dispersant selon l'une quelconque des revendications 1 à 3 ou 8 à 10, dans lequel MA comprend de la polyéthylèneimine ou de la polyéthylèneimine modifiée.

12. Procédé selon l'une quelconque des revendications 4 à 11, comprenant en outre l'étape (f) :
réaction de (PE1)ₚ-MA-(PE2)_{q} avec (a) un isocyanate, une lactone, un époxy, un anhydride, un carbonate cyclique, un (méth)acrylate par l'intermédiaire d'une réaction d'addition de Michael, et/ou une espèce polymère ayant un groupe qui réagit avec une amine primaire ou secondaire pour former un sel ou une liaison covalente, (b) une espèce oxydante qui pourrait convertir le groupe amine en un oxyde nitrique, (c) un agent de salification, ou (d) un groupe amine tertiaire de ladite espèce multiamine ou le dispersant contenant l'espèce multiamine est amené à réagir avec un agent de quaternisation pour former un groupe amine quaternisé.

13. Procédé selon l'une quelconque des revendications 4 à 12 ou dispersant selon l'une quelconque des revendications 1 à 3, ou 8 à 11, dans lequel Q est dérivé d'acides dihydroxyl mono-carboxyliques choisis parmi acide 2,2-bis(hydroxyméthyl)butyrique, acide 2,2-bis(hydroxyméthyl)proponique, ou mélanges de ceux-ci.

14. Utilisation du produit de réaction du procédé selon l'une quelconque des revendications 4 à 13 en tant que dispersant.

15. Revêtement, peinture, encre, ou caoutchouc ou plastique composé comprenant un solide particulaire dispersé, un milieu continu, et un composé dispersant, dans lequel le dispersant comprend le dispersant selon les revendications 1 à 3, 8 à 11 ou 13.

16. Revêtement, peinture, encre ou caoutchouc ou plastique composé comprenant un solide particulaire dispersé, un milieu continu, et un composé dispersant, dans lequel le dispersant comprend le dispersant obtenu/pouvant être obtenu par le procédé selon l'une quelconque des revendications 4 à 13.
